# EUROPEAN PATENT SPECIFICATION

(11) **EP 3 778 105 B1**
(45) Date of publication and mention of the grant of the patent: **24.08.2022**
(21) Application number: 19777524.0
(22) Date of filing: 20.03.2019
(51) Int. Cl.: B23K 26/38, G05B 19/4093

(54) **PROCESSING PROGRAM GENERATION DEVICE AND PROCESSING PROGRAM GENERATION METHOD**
VERARBEITUNGSPROGRAMMERZEUGUNGSVORRICHTUNG UND VERARBEITUNGSPROGRAMMERZEUGUNGSVERFAHREN
DISPOSITIF DE GÉNÉRATION DE PROGRAMMES DE TRAITEMENT ET PROCÉDÉ DE GÉNÉRATION DE PROGRAMMES DE TRAITEMENT

(30) Priority: 28.03.2018 JP 2018061667
(43) Date of publication of application: 17.02.2021
(73) Proprietor: Amada Co., Ltd., Isehara-shi, Kanagawa 259-1196 (JP)
(72) Inventor: NONAKA, Takashi, Isehara-shi, Kanagawa 259-1196 (JP); ISHIKAWA, Yuuki, Isehara-shi, Kanagawa 259-1196 (JP)
(74) Representative: Grünecker Patent- und Rechtsanwälte PartG mbB
(86) International application number: PCT/JP2019/011778
(87) International publication number: WO 2019/188686

(56) References cited:
- EP-A1- 3 106 945
- WO-A1-2011/042058
- JP-A- H09 285 886
- JP-A- 2016 170 504

## Description

### [TECHNICAL FIELD]

The present disclosure relates to processing program generation device and a processing program generation method for generating allocation data for cutting a plurality of parts from a material.

### [BACKGROUND ART]

A laser processing machine cuts a material with a laser beam to create parts having predetermined shapes and sizes. As an example, in a case where a square part whose side is 100 mm is intended to be created under a condition that a beam diameter of the laser beam is 1 mm, if the material is cut without changing a coordinate value of a square part graphic, a square part whose side is 99 mm is created.

Therefore, the laser processing machine, in a case where the periphery of the part graphic is cut in the clockwise direction, displaces the laser beam on the left side of the part graphic by the distance of the beam diameter and cuts the periphery of the part graphic, and alternatively, in a case where the periphery of the part graphic is cut in the counterclockwise direction, displaces the laser beam on the right side of the part graphic by the distance of the beam diameter and cuts the periphery of the part graphic. As disclosed in Patent Literature 1, a displacement of the beam diameter of the former is referred to as a left-side tool diameter correction and a displacement of the beam diameter of the latter is referred to as a right-side tool diameter correction.

Patent Literature 1 discloses that the adjacent part graphics are caused to be in proximity to each other so that a distance between the adjacent part graphics is the beam diameter, and space between the part graphics is cut with the laser beam so that a plurality of parts are created. If the laser processing machine cuts the plurality of parts from such material, it is not necessary to provide a "bridge" between the adjacent part graphics, and thus, the number of parts cut out from the material can be increased, and a usage rate can be improved.

Patent Literature 2 relates to a method for preparing machine cutting in sheet material. A set of geometries is obtained and positioned for cutting. A format of sheet material based on the positioned geometries is determined. The parts within the set of geometries may be positioned so close to one another so that only the thickness of one cut of the cutting device is found between adjacent parts.

### [Citation List]

### [Patent Literature]

[Patent Literature 1] WO 2011/042058 A1 Japanese Translation of PCT International Application Publication No. JP-T-2013-507253
[Patent Literature 2] EP 3 106 945 A1

### [SUMMARY OF THE INVENTION]

In a case of cutting a plurality of part graphics that are in proximity to one another so that a distance between adjacent part graphics is a beam diameter, a cut line between the adjacent part graphics serves as a shared cutting line. An operator sets an allocation of a cut path for cutting an outer periphery of a part graphic to each part graphic of the plurality of part graphics. The laser processing machine may not cut again a once cut positon of the material. Therefore, the operator needs to set an allocation such that the shared cutting line is allocated to one of the two adjacent part graphics and a shared cutting line portion of the other part graphic is not cut.

In addition, as described above, depending on whether the part graphics is cut in a clockwise direction or whether the part graphics is cut in a counterclockwise direction, a direction in which a cutting position is displaced by the distance of the beam diameter changes, and thus, an operator needs to set a displacement direction of a cutting portion that is displaced by the distance of the beam diameter in correspondence with the cutting propagation direction set for each part graphic.

The allocation operation of the cut path to aggregated part graphics formed from the plurality of part graphics in which a cut line between the adjacent part graphics is set to be the shared cutting line in this way is extremely complicated. Accordingly, conventionally, an experienced operator has been demanded to perform an allocation operation and it has been difficult for an inexperienced operator to perform an allocation operation. Therefore, an allocation data generation device and an allocation data generation method that allow an operator to easily perform an allocation operation to aggregated part graphics regardless of whether an operator is experienced or inexperienced are demanded.

An object of an embodiment is to provide a processing program device and a processing program generation method that allow an easy allocation operation of a cut path to aggregated part graphics.

The invention is defined by the features of the independent claims.

In accordance with a processing program generation device and a processing program generation method according to an embodiment, an allocation operation of a cut path can be easily performed to aggregated part graphics in which a cut line between adjacent part graphics is set to be a shared cutting line.

### [BRIEF DESCRIPTION OF THE DRAWINGS]

FIG. 1 is a block diagram illustrating a laser processing system having an allocation data generation device according to an embodiment.
FIG. 2 is a flowchart illustrating schematic allocation data generation processes in accordance with an allocation data generation device and an allocation data generation method according to an embodiment.
FIG. 3A a flowchart illustrating particular processes in step S3 of FIG. 2.
FIG. 3B is a flowchart illustrating particular processes in step S3 of FIG. 2.
FIG. 4 is a diagram illustrating a first pattern in which aggregated part graphics are formed and an external shape cutting line and a shared cutting line are set in accordance with an allocation data generation device and an allocation data generation method according to an embodiment.
FIG. 5 is a diagram illustrating a second pattern in which aggregated part graphics are formed and an external shape cutting line and a shared cutting line are set in accordance with an allocation data generation device and an allocation data generation method according to an embodiment.
FIG. 6 is a diagram illustrating a third pattern in which aggregated part graphics are formed and an external shape cutting line and a shared cutting line are set in accordance with an allocation data generation device and an allocation data generation method according to an embodiment.
FIG. 7A is a diagram illustrating a fourth pattern in which aggregated part graphics are formed and an external shape cutting line and a shared cutting line are set in accordance with an allocation data generation device and an allocation data generation method according to an embodiment.
FIG. 7B is a diagram illustrating a fourth pattern in which aggregated part graphics are formed and an external shape cutting line and a shared cutting line are set in accordance with an allocation data generation device and an allocation data generation method according to an embodiment.
FIG. 8A is a diagram illustrating a fifth pattern in which aggregated part graphics are formed and an external shape cutting line and a shared cutting line are set in accordance with an allocation data generation device and an allocation data generation method according to an embodiment.
FIG. 8B is a diagram illustrating a fifth pattern in which aggregated part graphics are formed and an external shape cutting line and a shared cutting line are set in accordance with an allocation data generation device and an allocation data generation method according to an embodiment.
FIG. 9A is a diagram illustrating a sixth pattern in which aggregated part graphics are formed and an external shape cutting line and a shared cutting line are set in accordance with an allocation data generation device and an allocation data generation method according to an embodiment.
FIG. 9B is a diagram illustrating a sixth pattern in which aggregated part graphics are formed and an external shape cutting line and a shared cutting line are set in accordance with an allocation data generation device and an allocation data generation method according to an embodiment.
FIG. 10 is a diagram illustrating an example pattern in which an adjacent line is present in a part that is different from a part set with a shared cutting set line in a case where aggregated part graphics are formed in accordance with an allocation data generation device and an allocation data generation method according to an embodiment.
FIG. 11 is a diagram illustrating an example pattern in which aggregated part graphics may not be formed in accordance with an allocation data generation device and an allocation data generation method according to an embodiment.
FIG. 12A is a diagram illustrating an example of a state in which a display displays four part graphics for forming aggregated part graphics.
FIG. 12B illustrates a state in which a reference point and a shared cutting set line are set to a first set of part graphics of the four part graphics illustrated in FIG. 12A.
FIG. 12C is a diagram illustrating a state in which a first set of part graphics illustrated in FIG. 12B form aggregated part graphics.
FIG. 12D is a diagram illustrating a state in which, in FIG. 12C, a reference point and a shared cutting set line are set to a second set of part graphics.
FIG. 12E is a diagram illustrating a state in which the second set of part graphics illustrated in FIG. 12D form aggregated part graphics so that three part graphics form aggregated part graphics.
FIG. 12F is a diagram illustrating a state in which, in FIG. 12E, a reference point and a shared cutting set line are set to a third set of part graphics.
FIG. 12G is a diagram illustrating a state in which the third set of part graphics illustrated in FIG. 12F form aggregated part graphics so that four part graphics form aggregated part graphics.
FIG. 13 is a diagram illustrating a state in which an external shape cutting line and a shared cutting line are set to the aggregated part graphics illustrated in FIG. 12G in accordance with an allocation data generation device and an allocation data generation method according to an embodiment.
FIG. 14 is a block diagram illustrating an example of a functional internal constitution of a central processing unit constituting an allocation data generation device according to an embodiment.
FIG. 15A is a diagram illustrating a state in which an external shape cutting line and a shared cutting line are set to aggregated part graphics formed by four rectangular-shaped part graphics.
FIG. 15B is a diagram illustrating an example of an allocation pattern of a cut path allocated to the external shape cutting line and the shared cutting line illustrated in FIG. 15A.
FIG. 16 is a diagram illustrating a comparative example in which a cut path is allocated to aggregated part graphics formed by four rectangular-shaped part graphics based on a conventional allocation method.

### [MODES FOR CARRYING OUT THE INVENTION]

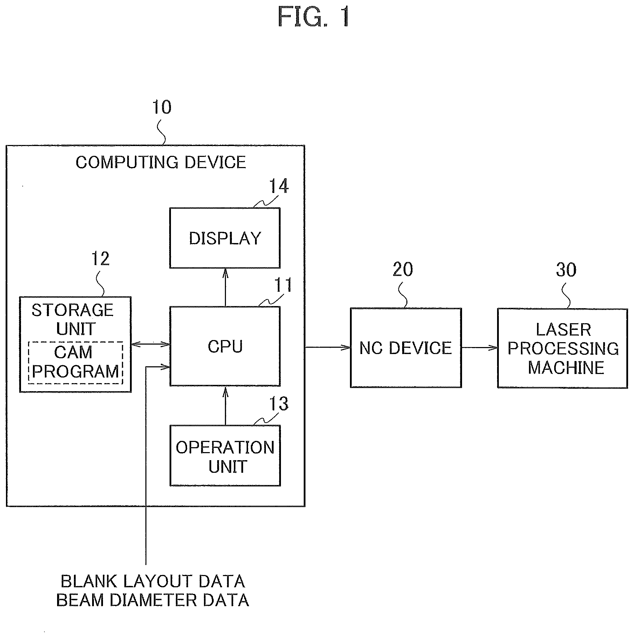

An allocation data generation device and an allocation data generation method according to an embodiment are described below with reference to the accompanying diagrams. In FIG. 1, a computing device 10, an NC device 20, and a laser processing machine 30 constitute a laser processing system. The computing device 10 includes a central processing unit (CPU) 11, a storage unit 12 that stores a CAM (Computer Aided Manufacturing) program, an operation unit 13, and a display 14. The computing device 10 is a CAM device functioning as a CAM by the CPU 11 executing the CAM program.

The CPU 11 receives blank layout data in which part graphics are arranged in a graphic showing a material (a sheet metal) and beam diameter data when the laser processing machine 30 cuts a material with a laser beam. The computing device 10 may be a CAD/CAM device having a CAD (Computer Aided Design) program in addition to the CAM program and may generate the part graphics and then, the blank layout data.

The CPU 11, as more fully discussed hereinafter, causes a plurality of part graphics to be aggregated to generate aggregated part graphics and generates the allocation data by setting an allocation of a cut path so as to cut the aggregated part graphics in a shared manner. The CPU 11 generates a processing program based on the blank layout data and the allocation data. The processing program is constituted from a machine control code used by the NC device 20 to control the laser processing machine 30. The NC device 20, based on the processing program, controls the laser processing machine 30 so as to cut the aggregated part graphics from the material. The plurality of parts are created by the laser processing machine 30 cutting the aggregated part graphics from the material.

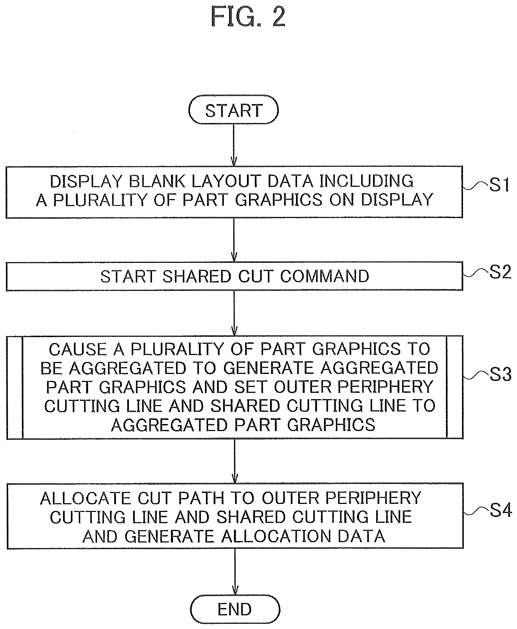

A flowchart illustrated in FIG. 2 shows schematic processes of generating the allocation data of the aggregated part graphics performed by the CPU 11. In FIG. 2, after a process starts, the CPU 11, in step S1, displays the blank layout data including the plurality of part graphics on a display 14. After being instructed by an operator to start a shared cut command, the CPU 11, in step S2, starts the shared cut command. The CPU 11, in step S3, causes the plurality of part graphics to be aggregated to generate the aggregated part graphics and sets a shared cutting line and an outer periphery cutting line to the aggregated part graphics.

The CPU 11, in step S4, allocates the cut path to the shared cutting line and the outer periphery cutting line to generate the allocation data and ends the processes.

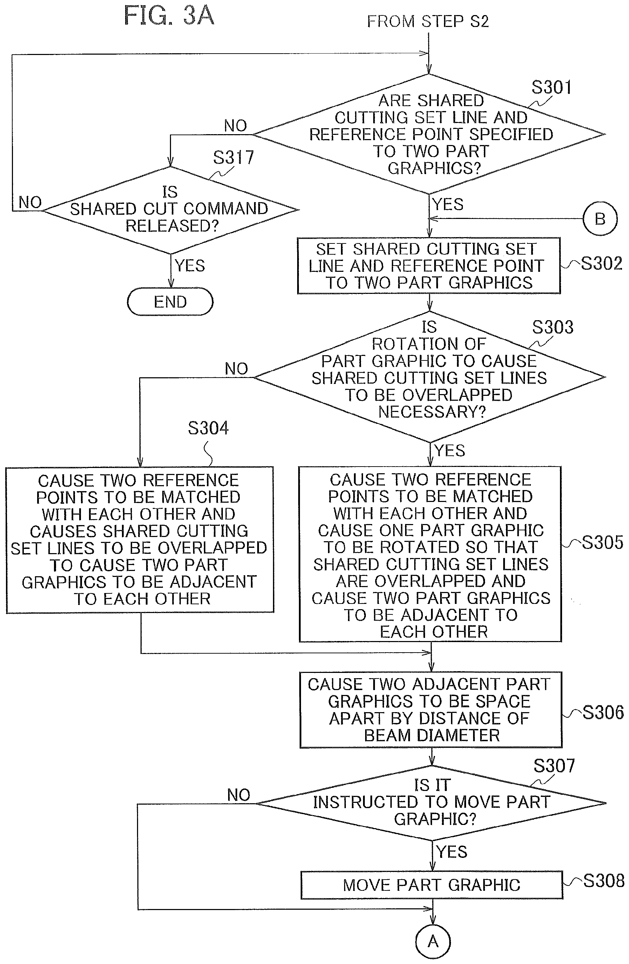

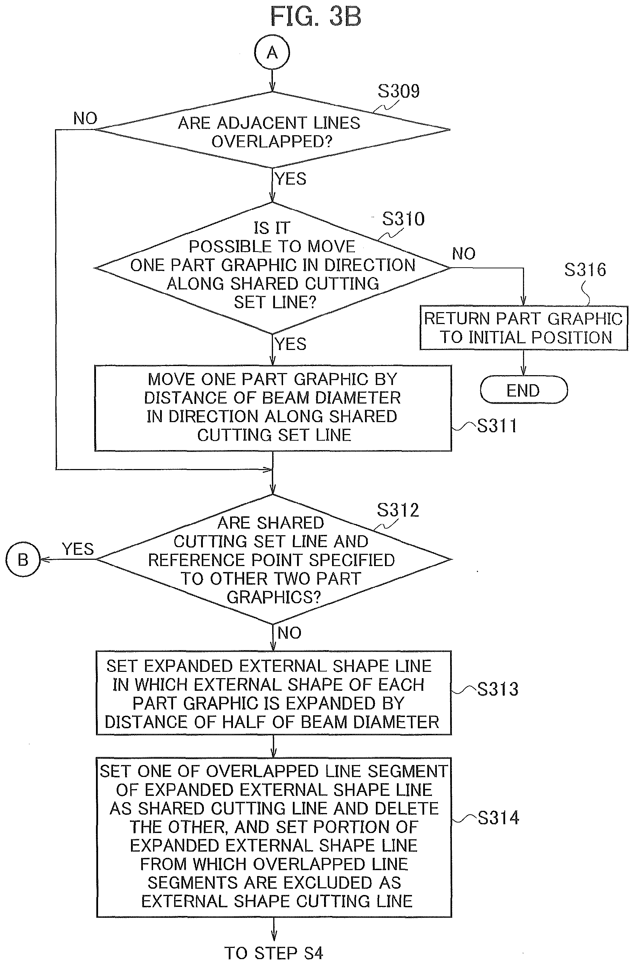

Flowcharts in FIG. 3A and FIG. 3B illustrate specific processes of step S3. In FIG. 3A, the CPU 11 determines, in step S301, whether a shared cutting set line and a reference point are specified to two part graphics. If the shared cutting set line and the reference point are not specified (NO), the CPU 11 determines, in step S317, whether the shared cut command is released. IF the shared cut command is not released (NO), the CPU 11 returns the process to step S301, and alternatively, if he shared cut command is released (YES), the CPU 11 ends the processes.

In step S301, if the shared cutting set line and the reference point are specified (YES), the CPU 11, in step S302, sets the shared cutting set line and the reference point to the two part graphics. The details of the shared cutting set line and the reference point will be described later.

In step S301, the shared cutting set line and the reference point can be specified only to line segments that are straight linear portions in external shape lines of the part graphics. If the external shape lines of the part graphics include curved linear portions, the shared cutting set line and the reference point may not be specified to the curved linear portions.

The CPU 11 determines, in step S303, whether the rotation of the part graphics is necessary to cause the shared cutting set lines of the two part graphics to be overlapped with each other. If the rotation is not necessary (NO), the CPU 11, in step S304, causes the two reference points to be matched with each other and causes the shared cutting set lines to be overlapped to cause the two part graphics to be adjacent to each other.

In step S303, if the rotation is necessary (YES), the CPU 11, in step S305, causes the reference points of the two part graphics to be matched and causes one part graphic to be rotated on the reference point so that the shared cutting set lines are overlapped, and causes the two part graphics to be adjacent to each other.

The CPU 11, following step S304 or S305, in step S306, causes line segments set with the shared cutting set lines of the two adjacent part graphics to be space apart by a distance of a beam diameter.

The CPU 11 determines, in step S307, whether it is instructed to move the part graphics. If it is instructed to move the part graphics (YES), the CPU 11, in step S308, moves the part graphics and advances a process to step S309 in FIG. 3B. Alternatively, if it is not instructed to move the part graphics (NO), the CPU 11 causes the process to be advanced from step S307 to step S309.

In FIG. 3B, the CPU 11 determines in step S309, whether adjacent lines are overlapped. The details of the adjacent lines will be described later. The CPU 11 causes the process to be advanced to S310 if the adjacent lines are overlapped (YES), and alternatively causes the process to be advanced to step S312 if the adjacent lines are not overlapped (NO).

The CPU 11 determines, in step S310, whether one part graphic can be moved in a direction along the shared cutting set line. If one part graphic may not be moved in the direction along the shared cutting set line (NO), the aggregated part graphics may not be cut in a shared manner, and thus, the CPU 11, in step S316, returns the part graphic to an initial position and ends the processes. Alternatively, if one part graphic can be moved in the direction along the shared cutting set line (YES), the CPU 11, in step S311, causes one part graphic to be moved by the distance of the beam diameter in the direction along the shared cutting set line.

The CPU 11 determines, in step S312, whether the shared cutting set line and the reference point are specified to the other two part graphics. If the shared cutting set line and the reference point are specified to the other two part graphics (YES), the CPU 11 returns the process to step S302 in FIG. 3A and repeats processes from step S302 to step S312. Alternatively, if the shared cutting set line and the reference point are not specified to the other two part graphics (NO), and the aggregated part graphics are determined, the CPU 11 causes the process to be advanced to step S313.

The CPU 11 sets, in step S313, an expanded external shape line in which an external shape of each part graphic of the aggregated part graphics is expanded by the half of a distance of a beam diameter. The CPU 11, in step S314, sets one of the mutually overlapped line segments of the expanded external shape lines as the shared cutting line and deletes the other. Further, the CPU 11, in step S314, sets portions of the expanded external shape line from which the mutually overlapped line segments are excluded as external shape cutting lines of the aggregated part graphics. After the external shape cutting line and the shared cutting line are set, the CPU 11, in step S314, causes the process to be advanced to step S4 in FIG. 2.

Next, by taking various shapes of a part graphic as an example, a plurality of patterns are described in which aggregated part graphics are formed, and the external shape cutting line and the shared cutting line are set.

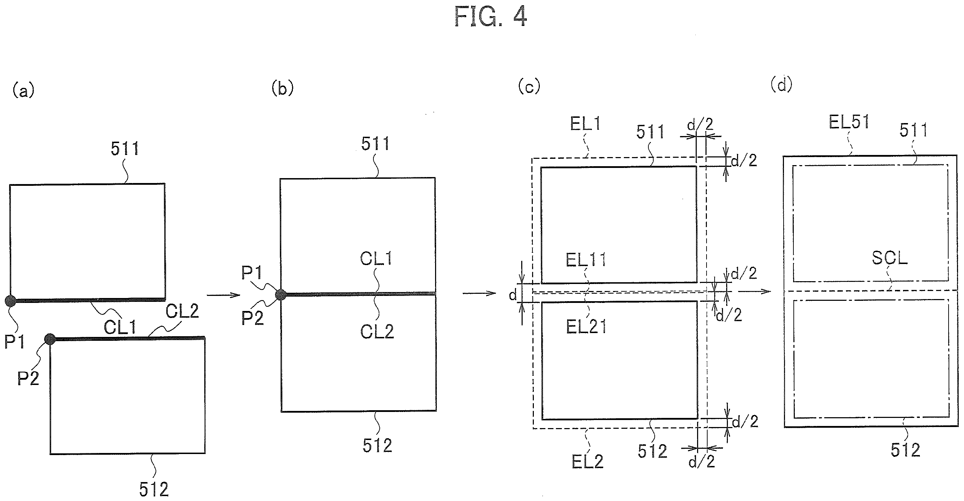

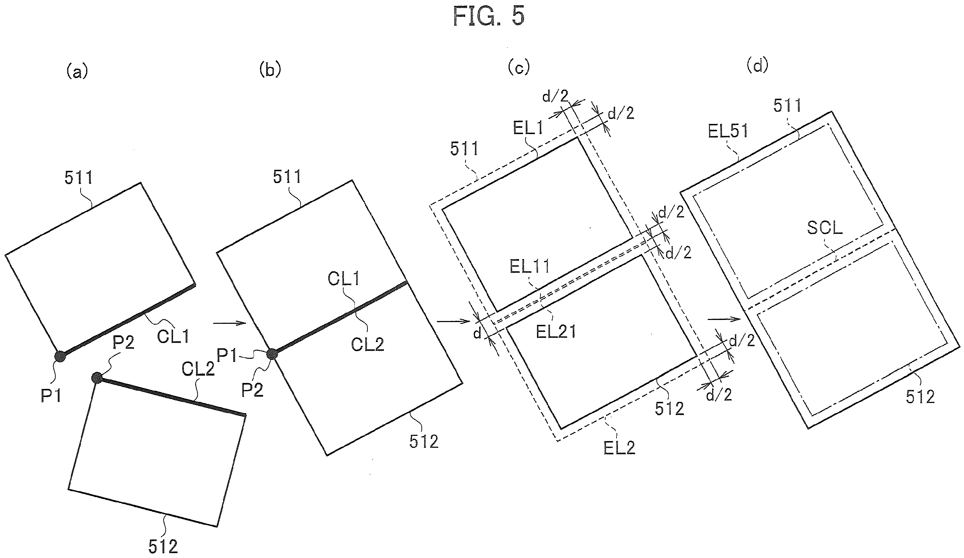

FIG. 4 illustrates a case where two rectangular-shaped part graphics 511 and 512 from aggregated part graphics. The part graphics 511 and 512 are displayed on the display 14 in a state of being arranged on a graphic showing a material that is not illustrated in FIG. 4. The same applied in or after FIG. 5. In FIG. 4, the part graphic 511 and the part graphic 512 are arranged with their sides being parallel.

As illustrated in (a) of FIG. 4, an operator sets a reference point P1 and a shared cutting set line CL1 to the part graphic 511 and sets a reference point P2 and a shared cutting set line CL2 to the part graphic 512 (steps S301 and S302). The reference points P1 and P2 are positioned above the shared cutting set lines CL1 and CL2 respectively. The shared cutting set lines CL1 and CL2 function as lines for specifying a position for setting a shared cutting line which will be described later.

As illustrated in (b) of FIG. 4, the CPU 11 causes the reference point P1 and the reference point P2 to be matched with each other and causes the shared cutting set line CL1 and the shared cutting set line CL2 to be overlapped with each other to cause the part graphics 511 and 512 to be adjacent to each other (step S304). (b) of FIG. 4 illustrates processes performed by the CPU 11, and it is not meant that a state of (b) of FIG. 4 is displayed on the display 14. Here, it is not necessary to rotate the part graphic 511 or 512, and if the reference point P1 and the reference point P2 are caused to be matched with each other, the shared cutting set line CL1 and the shared cutting set line CL2 come to be overlapped with each other.

The reference points P1 and P2 are reference positions when the shared cutting set line CL1 and the shared cutting set line CL2 are overlapped with each other. It is also possible to set end portions of the shared cutting set lines CL1 and CL2 as the reference positions, and thus, it is not essential to set the reference points P1 and P2. If the reference points P1 and P2 are set, it is possible to decide a position at which the shared cutting set line CL1 and the shared cutting set line CL2 are overlapped with each other, and thus, it is rather preferable to set the reference points P1 and P2.

As illustrated in (c) of FIG. 4, the CPU 11 causes the part graphic 511 and the part graphic 512 to be spaced apart in parallel by the distance d of the beam diameter (step S306). The CPU 11 sets an expanded external shape line EL1 in which an external shape of the part graphic 511 is expanded by a distance d/2 that is half of a distance of a beam diameter and sets an expanded external shape line EL2 in which an external shape of the part graphic 512 is expanded by the distance d/2 (step S313). Similarly, (c) of FIG. 4 illustrates processes performed by the CPU 11, and it is not meant that a state of (c) of FIG. 4 is displayed on the display 14.

In (c) of FIG. 4, a portion of the expanded external shape line EL1 in contact with the expanded external shape line EL2 is defined as a line segment EL11 and a portion of the expanded external shape line EL2 in contact with the expanded external shape line EL1 is defined as a line segment EL21. (c) of FIG. 4 illustrates the line segment EL11 and the line segment EL21 in the way that they are slightly spaced apart from each other, but both of the line segment EL11 and the line segment EL21 are positioned at the same position and are overlapped with each other.

As described above, the laser processing machine 30 may not cut again a once cut position of a material, and thus, it is not possible to set both the line segment EL11 and the line segment EL21 as cutting lines. Then, as illustrated in (d) of FIG. 4, the CPU 11 sets one of the line segment EL11 and the line segment EL21 as a shared cutting line SCL illustrated by a short dashed line and deletes the other (step S314) . Further, the CPU 11 sets a portion of the expanded external shape lines EL1 and EL2 from which the line segments EL11 and EL21 are excluded as an external shape cutting line EL51 illustrated with a solid line (step S314). The external shape cutting line EL51 is a cutting line for cutting an external shape of the entire aggregated part graphic formed from the part graphics 511 and 512.

The display 14 is displayed with the external shape cutting line EL51 and the shared cutting line SCL. Here, in order that the external shape cutting line EL51 and the shared cutting line SCL can be distinguished from each other, the former is illustrated with a solid line, and the latter is illustrated with a short dashed line. As display states of the external shape cutting line EL51 and the shared cutting line SCL displayed on the display 14, a color or a line styles may be differentiated so that both the external shape cutting line EL51 and the shared cutting line SCL can be distinguished from each other or alternatively a color or a line style may not be differentiated.

The CPU 11, in accordance with an instruction by an operator, sets the allocation of the cut path in order that the laser processing machine 30 cuts the external shape cutting line EL51 and the shared cutting line SCL (step S4). At this time, it is enough if the CPU 11 allocates the cut path to the external shape cutting line EL51 and the shared cutting line SCL. Accordingly, the operator does not need to set a direction in which a cutting position is displaced by a distance d of a beam diameter.

If a material in which the external shape cutting line EL51 and the shared cutting line SCL are blanked is cut according to the allocation of the cut path set for the laser processing machine 30, two parts corresponding to the part graphics 511 and 512 illustrated with one-dot chain lines in (d) of FIG. 4 are created.

As similar to FIG. 4, FIG. 5 illustrates a case in which the two rectangular-shaped part graphics 511 and 512 form the aggregated part graphics, and to cause the shared cutting set line CL1 and the shared cutting set line CL2 to be overlapped with each other, the part graphic 511 or 512 needs to be rotated. As illustrated in (a) of FIG. 5, an operator sets the reference point P1 and the shared cutting set line CL1 to the part graphic 511 and sets the reference point P2 and the shared cutting set line CL2 to the part graphic 512 (steps S301 and 302).

The CPU 11 determines, in step S303 of FIG. 3A, that the rotation of the part graphics is necessary to cause the shared cutting set line CL1 and the shared cutting set line CL2 to be overlapped with each other. Then, the CPU 11, as illustrated in (b) of FIG. 5, causes the reference point P1 and the reference point P2 to be matched with each other and causes, for example, the part graphic 512 to be rotated on the reference point P1 so that the shared cutting set lines CL1 and CL2 are overlapped with each other (step S305). The (c) and (d) of FIG. 5 are similar to (c) and (d) of FIG. 4 respectively.

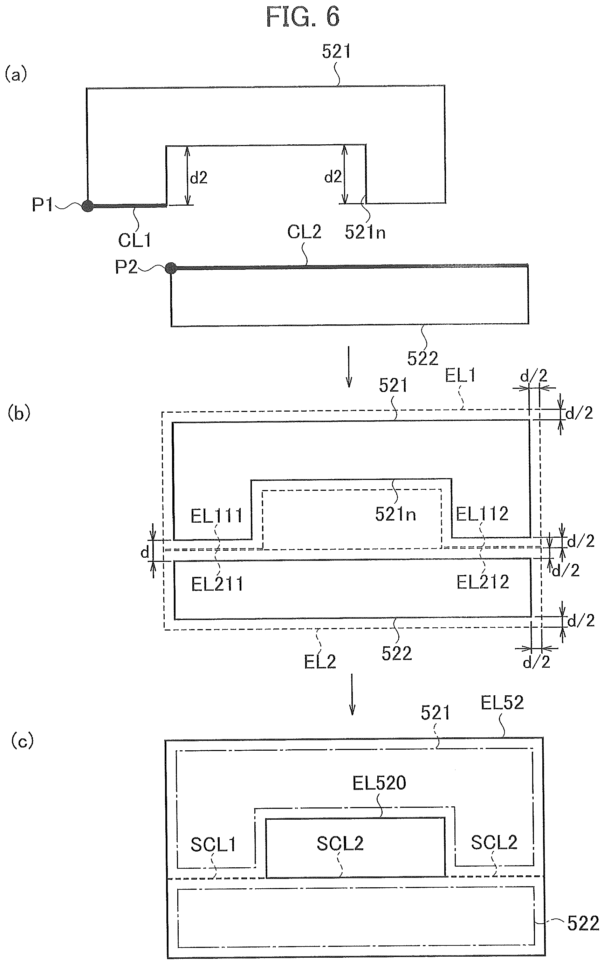

FIG. 6 illustrates a case where a part graphic 521 with a cutout 521n and a rectangular-shaped part graphic 522 form aggregated part graphics. The depth of the cutout 521n is d2 and is uniform. As illustrated in (a) of FIG. 6, the operator sets the reference point P1 and the shared cutting set line CL1 to the part graphic 521 and sets the reference point P2 and the shared cutting set line CL2 to the part graphic 522 (steps S301 and S302).

Although the illustration is omitted, the CPU 11 causes the reference point P1 and the reference point P2 to be matched with each other and causes the shared cutting set line CL1 and the shared cutting set line CL2 to be overlapped with each other to cause the part graphics 521 and 522 to be adjacent with each other (step S304). Here, it is not necessary to rotate the part graphic 521 or 522, and if the reference point P1 and the reference point P2 are caused to be matched with each other, the shared cutting set line CL1 and the shared cutting set line CL2 are overlapped with each other.

As illustrated in (b) of FIG. 6, the CPU 11 causes the part graphic 521 and the part graphic 522 to be spaced apart by a distance d in parallel (step S306). The CPU 11 sets the expanded external shape line EL1 in which an external shape of the part graphic 521 is expanded by the distance d/2 and sets the expanded external shape line EL2 in which an external shape of the part graphic 522 is expanded by the distance d/2 (step S313).

At this time, the portions of the expanded external shape line EL1 in contact with the expanded external shape line EL2 are the line segments EL111 and EL112 and the portions of the expanded external shape line EL2 in contact with the expanded external shape line EL1 are the line segments EL211 and EL212. (b) of FIG. 6 illustrates the line segments in the way that the line segment EL111 and the line segment EL211 are slightly spaced apart from each other and the line segment EL112 and the line segment EL212 are slightly spaced apart from each other, but both of the line segment EL111 and the line segment EL211 and both of the line segment EL112 and the line segment EL212 are positioned at the same position and are overlapped with each other.

As illustrated in (c) of FIG. 6, the CPU 11 sets one of the line segment EL111 and the line segment EL211 as the shared cutting line SCL1 illustrated by a short dashed line and deletes the other, and sets one of the line segment EL112 and the line segment EL212 as the shared cutting line SCL2 illustrated by a short dashed line and deletes the other

(step S314). Further, the CPU 11 sets a portion of the expanded external shape lines EL1 and EL2 from which the line segments EL111, EL112, EL211 and EL212 are excluded as an external shape cutting line EL52 illustrated with a solid line (step S314). Here, the external shape cutting line EL52 includes an inside cutting line EL520.

The CPU 11, in accordance with an instruction by an operator, sets the allocation of the cut path for the laser processing machine 30 to cut the external shape cutting line EL52 including the cutting line EL520 and the shared cutting lines SCL1 and SCL2 (step S4). Similarly, the operator does not need to set the direction in which the cutting position is displaced by the distance d of the beam diameter.

If a material in which the external shape cutting line EL52 including the cutting line EL520 and the shared cutting lines SCL1 and SCL2 are blanked is cut according to the allocation of the cut path set for the laser processing machine 30, two parts corresponding to the part graphics 521 and 522 illustrated with a one-dot chain line in (c) of FIG. 6 are created.

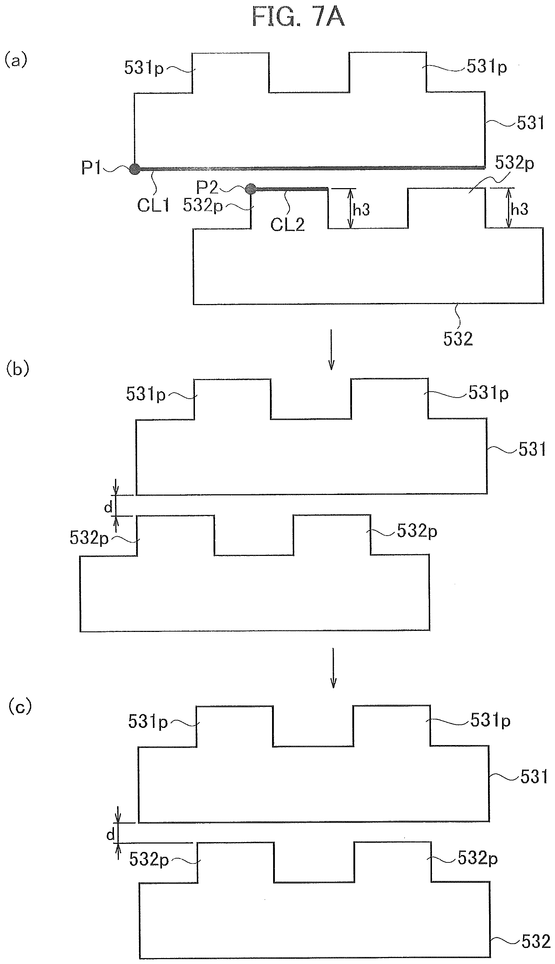

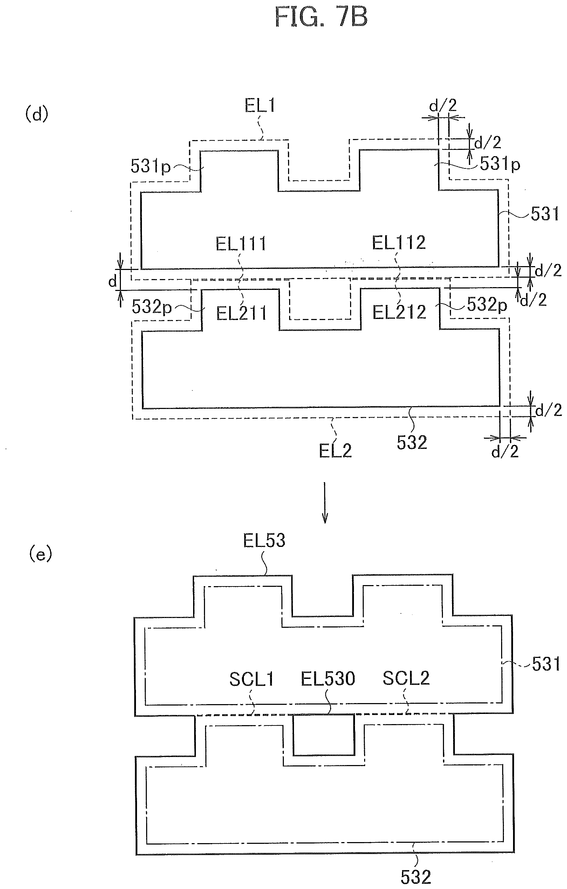

FIG. 7A and FIG. 7B illustrates a case where a part graphic 531 having two projection portions 531p and a part graphic 532 having two projection portions 532p form aggregated part graphics. The height of the two projection portions 532p is h3 and is the same. As illustrated in (a) of FIG. 7A, the operator sets the shared cutting set line CL1 and the reference point P1 to the part graphic 531 and sets the shared cutting set line CL2 and the reference point P2 to the part graphic 532 (steps S301 and S302).

Although the illustration is omitted, the CPU 11 causes the reference point P1 and the reference point P2 to be matched with each other and causes the shared cutting set line CL1 and the shared cutting set line CL2 to be overlapped with each other to cause the part graphics 531 and 532 to be adjacent to each other (step S304). In this diagram, it is not necessary to rotate the part graphic 531 or 532, and if the reference point P1 and the reference point P2 are caused to be matched with each other, the shared cutting set line CL1 and the shared cutting set line CL2 are overlapped with each other.

As illustrated in (b) of FIG. 7A, the CPU 11 causes the part graphic 531 and the part graphic 532 to be spaced apart by the distance d in parallel (step S306). It is assumed that an operator has instructed in step S308 of FIG. 3A, to move the part graphic 532 in a direction along the shared cutting set line CL1. As illustrated in (c) of FIG. 7A, the CPU 11, in accordance with an instruction by the operator, moves the part graphic 532 in the way that positions of left end portions of the part graphics 531 and 532 are matched, for example (step S309).

As illustrated in (d) of FIG. 7B, the CPU 11 sets the expanded external shape line EL1 in which an external shape of the part graphic 531 is expanded by the distance d/2 and the expanded external shape line EL2 in which an external shape of the part graphic 532 is expanded by the distance d/2 (step S313) .

At this time, the portions of the expanded external shape line EL1 in contact with the expanded external shape line EL2 are defined as the line segments EL111 and EL112 and the portions of the expanded external shape line EL2 in contact with the expanded external shape line EL1 are defined as the line segments EL211 and EL212. Similarly, the line segment EL111 and the line segment EL211 are illustrated to be slightly spaced apart from each other and the line segment EL112 and the line segment EL212 are illustrated to be slightly spaced apart from each other, but both of the line segment EL111 and the line segment EL211, and both of the line segment EL112 and the line segment EL212 are positioned at the same position and are overlapped with each other.

As illustrated in (e) of FIG. 7B, the CPU 11 sets one of the line segment EL111 and the line segment EL211 as the shared cutting line SCL1 illustrated by a short dashed line and deletes the other and sets one of the line segment EL112 and the line segment EL212 as the shared cutting line SCL2 illustrated by a short dashed line and deletes the other (step S314). Further, the CPU 11 sets the portion of the expanded external shape lines EL1 and EL2 from which the line segments EL111, EL112, EL211 and EL212 are excluded as an external shape cutting line EL53 illustrated with a solid line (step S314). In this diagram, the external shape cutting line EL53 includes an inside the cutting line EL530.

The CPU 11, in accordance with an instruction by an operator, sets an allocation of a cut path for the laser processing machine 30 to cut the external shape cutting line EL53 including the cutting line EL530, and the shared cutting lines SCL1 and SCL2 (step S4). Similarly, the operator does not need to set the direction in which the cutting position is displaced by the distance d of the beam diameter.

If a material in which the external shape cutting line EL53 including the cutting line EL530, and the shared cutting lines SCL1 and SCL2 are blanked is cut according to the allocation of the cut path set for the laser processing machine 30, two parts corresponding to the part graphics 531 and 532 illustrated with a one-dot chain line in (e) of FIG. 7B are created.

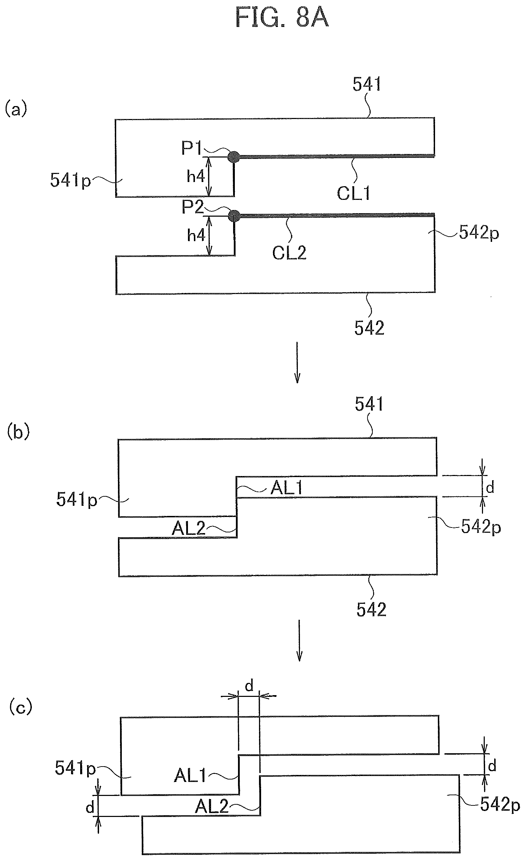

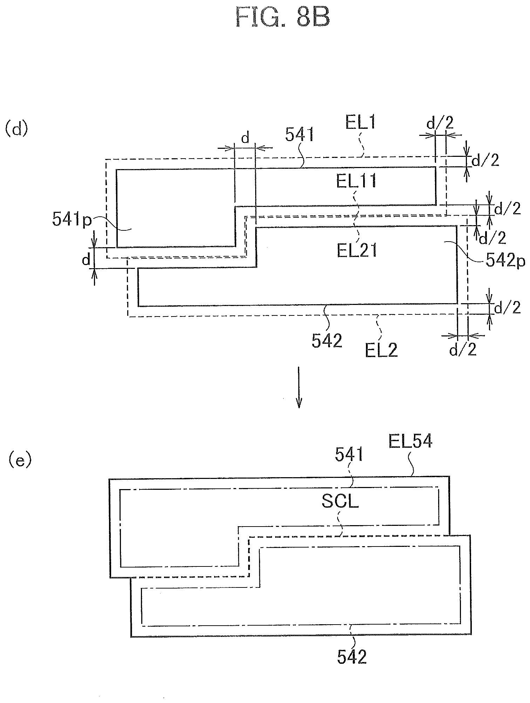

FIG. 8A and FIG. 8B illustrate a case where a part graphic 541 having a projection portion 541p and a part graphic 542 having a projection portion 542p form aggregated part graphics. The height of projection portions 541p and 542p is h4 and is the same. As illustrated in (a) of FIG. 8A, the operator sets the shared cutting set line CL1 and the reference point P1 to the part graphic 541 and sets the shared cutting set line CL2 and the reference point P2 to the part graphic 542 (steps S301 and S302).

Although the illustration is omitted, the CPU 11 causes the reference point P1 and the reference point P2 to be matched with each other and causes the shared cutting set line CL1 and the shared cutting set line CL2 to be overlapped with each other to cause the part graphics 541 and 542 to be adjacent to each other (step S304). In this diagram, it is not necessary to rotate the part graphic 541 or 542, and if the reference point P1 and the reference point P2 are caused to be matched with each other, the shared cutting set line CL1 and the shared cutting set line CL2 are overlapped with each other.

As illustrated in (b) of FIG. 8A, the CPU 11 causes the part graphic 541 and the part graphic 542 to be spaced apart by the distance d in parallel (step S306). In this diagram, an adjacent line AL1 of the shared cutting set line CL1 and an adjacent line AL2 of the shared cutting set line CL2 are overlapped with each other. An adjacent line is defines as a line segment coupled to a shared cutting set line. Then, the CPU 11 determines, in step S309 of FIG. 3B, that the adjacent line AL1 and the adjacent line AL2 are overlapped with each other (YES). The CPU 11 determines, in step S310, whether one part graphic can be moved in a direction of a shared cutting set line.

In (b) of FIG. 8A, it is determined that the part graphic 542 is movable in a direction along the shared cutting set lines CL1 and CL2. Then, as illustrated in (c) of FIG. 8A, in step S311, the CPU 11 causes the part graphic 542 to be moved by the distance d of the beam diameter in the direction along the shared cutting set lines CL1 and CL2. This causes the adjacent line AL1 and the adjacent line AL2 to be spaced apart from each other by the distance d.

As illustrated in (d) of FIG. 8B, the CPU 11 sets the expanded external shape line EL1 in which an external shape of the part graphic 541 is expanded by the distance d/2 and the expanded external shape line EL2 in which an external shape of the part graphic 542 is expanded by the distance d/2 (step S313) .

At this time, the portion of the expanded external shape line EL1 in contact with the expanded external shape line EL2 is defined as the line segment EL11 and the portion of the expanded external shape line EL2 in contact with the expanded external shape line EL1 is defined as the line segment EL21. Similarly, although the line segment EL11 and the line segment EL21 are illustrated to be slightly spaced apart from each other, both of the line segment EL11 and the line segment EL21 are positioned at the same position and are overlapped with each other.

As illustrated in (e) of FIG. 8B, the CPU 11 sets one of the line segment EL11 and the line segment EL21 as the shared cutting line SCL illustrated by a short dashed line and deletes the other (step S314). Further, the CPU 11 sets the portion of the expanded external shape lines EL1 and EL2 from which the line segments EL11 and EL21 are excluded as the external shape cutting line EL54 illustrated with a solid line (step S314).

The CPU 11, in accordance with an instruction by an operator, sets the allocation of the cut path for the laser processing machine 30 to cut the external shape cutting line EL54 and the shared cutting line SCL (step S4). Similarly, the operator does not need to set the direction in which the cutting position is displaced by the distance d of the beam diameter.

If a material in which the external shape cutting line EL54 and the shared cutting line SCL are blanked is cut according to the allocation of the cut path set for the laser processing machine 30, two parts corresponding to the part graphics 541 and 542 illustrated with a one-dot chain line in (e) of FIG. 8B are created.

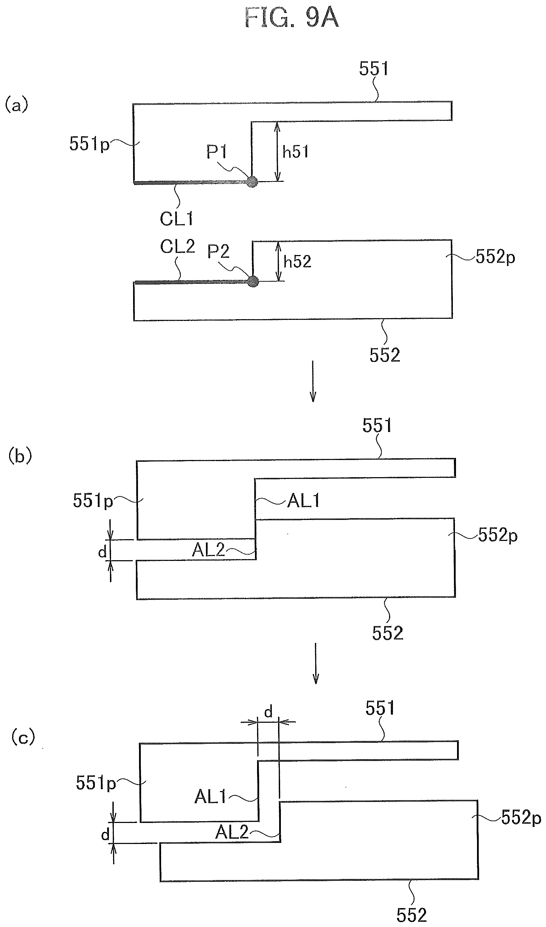

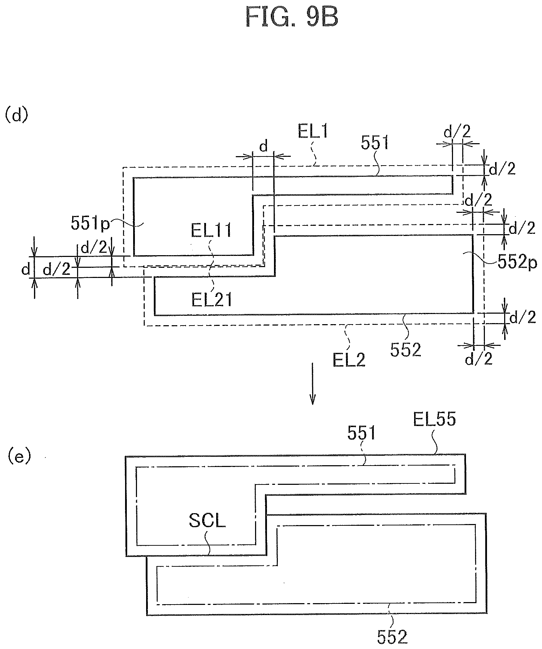

Part graphics 551 and 552 illustrated in FIG. 9A and FIG. 9B have shapes similar to those of the part graphics 541 and 542 illustrated in FIG. 8A and FIG. 8B respectively. However, as illustrated in (a) of FIG. 9A, the height of a projection portion 551p is h51 and the height of a projection portion 552p is h52, and h51 is higher than h52.

As illustrated in (a) of FIG. 9A, the operator sets the shared cutting set line CL1 and the reference point P1 to a part graphic 551 and sets the shared cutting set line CL2 and the reference point P2 to a part graphic 552 (steps S301 and S302).

As illustrated in (b) of FIG. 9A, in a case where the part graphic 551 and the part graphic 552 are spaced apart from each other by the distance d in parallel, the adjacent line AL1 of the shared cutting set line CL1 and the adjacent line AL2 of the shared cutting set line CL2 are overlapped with each other. As illustrated in (c) of FIG. 9A, the CPU 11 moves the part graphic 552 by the distance d of the beam diameter in the direction along the shared cutting set lines CL1 and CL2 (step S311).

As illustrated in (d) of FIG. 9B, the CPU 11 sets the expanded external shape line EL1 in which an external shape of the part graphic 551 is expanded by the distance d/2 and the expanded external shape line EL2 in which an external shape of the part graphic 552 is expanded by the distance d/2 ( step S313). At this time, the portion of the expanded external shape line EL1 in contact with the expanded external shape line EL2 is defined as the line segment EL11 and the portion of the expanded external shape line EL2 in contact with the expanded external shape line EL1 is defined as the line segment EL21.

As illustrated in (e) of FIG. 9B, the CPU 11 sets one of the line segment EL11 and the line segment EL21 as the shared cutting line SCL illustrated by a short dashed line and deletes the other (step S314). Further, the CPU 11 sets the portion of the expanded external shape lines EL1 and EL2 from which the line segments EL11 and EL21 are excluded as an external shape cutting line EL55 illustrated with a solid line (step S314).

The CPU 11, in accordance with an instruction by an operator, sets the allocation of the cut path for the laser processing machine 30 to cut the external shape cutting line EL55 and the shared cutting line SCL (step S4). If a material in which the external shape cutting line EL55 and the shared cutting line SCL are blanked is cut according to the allocation of the cut path set for the laser processing machine 30, two parts corresponding to the part graphics 551 and 552 illustrated with a one-dot chain line in (e) of FIG. 9B are created.

By the way, in a case where it is determined whether the adjacent line AL1 of the shared cutting set line CL1 and the adjacent line AL2 of the shared cutting set line CL2 are overlapped with each other, the adjacent line AL1 is sometimes present in a part graphic that is different from the part graphic set with the shared cutting set line CL1.

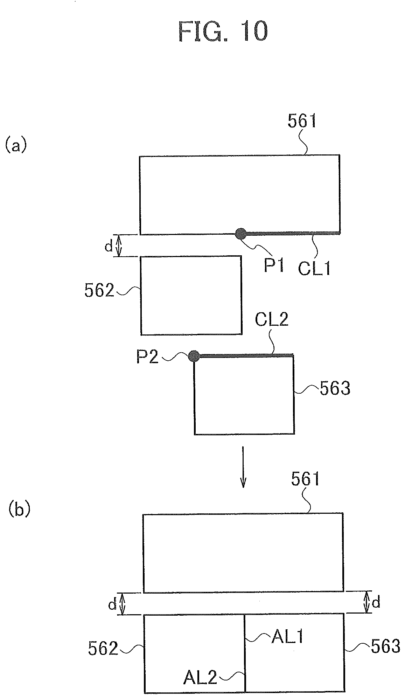

FIG. 10 illustrates a case where a part graphic 561 and a part graphic 562 are arranged to be adjacent to each other to form aggregated part graphics, and the aggregated part graphics and a part graphic 563 newly form aggregated part graphics. As illustrated in (a) of FIG. 10, the operator sets the reference point P1 and the shared cutting set line CL1 to the aggregated part graphics formed from the part graphics 561 and 562 and sets the reference point P2 and the shared cutting set line CL2 to the part graphic 563 (steps S301 and S302).

In (a) of FIG. 10, the part graphic 561 and the part graphic 562 are spaced apart from each other by the distance d in parallel by processes performed in steps S304 and S306.

In the part graphic 561 and the part graphic 563 also, by processes performed in steps S304 and S306, the reference point P1 and the reference point P2 are caused to be matched with each other, and the shared cutting set line CL1 and the shared cutting set line CL2 are caused to be overlapped with each other, and thereafter, the part graphic 561 and the part graphic 563 are caused to be spaced apart by the distance d in parallel. At this time, a side of the part graphic 562 facing the part graphic 563 is the adjacent line AL1 and a side of the part graphic 563 facing the part graphic 562 is the adjacent line AL2. Even in such a case, the same processes as in FIG. 8A and FIG. 8B, or the same processes as in FIG. 9A and FIG. 9B are performed.

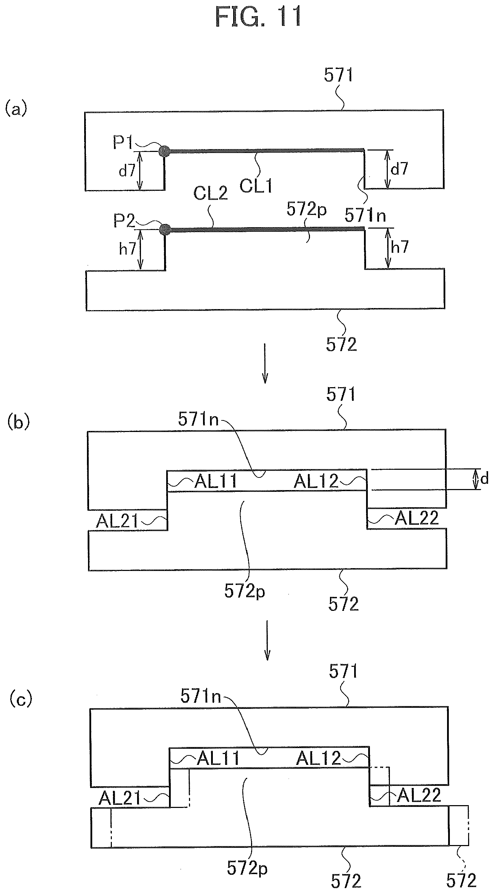

FIG. 11 illustrates a case where a part graphic 571 with the cutout 571n and a part graphic 572 with a projection portion 572p are intended to form aggregated part graphics. As illustrated in (a) of FIG. 11, the depth of the cutout 571n is d7 and is uniform, and the height of the projection portion 572p is h7 and is uniform. It is assumed that the depth d7 and the height h7 are equal. The operator sets the shared cutting set line CL1 and the reference point P1 to the part graphic 571 and sets the shared cutting set line CL2 and the reference point P2 to the part graphic 572 (steps S301 and S302).

The CPU 11 causes the reference point P1 and the reference point P2 to be matched with each other and causes the shared cutting set line CL1 and the shared cutting set line CL2 to be overlapped with each other to causes the part graphics 571 and 572 to be adjacent to each other (step S304), and then, the part graphic 571 and the part graphic 572 are caused to be spaced apart by the distance d in parallel (step S306). In this diagram, as illustrated in (b) of FIG. 11, the adjacent lines AL11 and AL12 of the shared cutting set line CL1 are overlapped with the adjacent lines AL21 and AL22 of the shared cutting set line CL2 respectively.

In this case, the CPU 11 determines, in step S310, whether one part can be moved in a direction perpendicular to an adjacent line, and determined that one part may not be moved (NO). As illustrated with an alternate long and two short dashed line that is an imaginary line in (c) of FIG. 11, even if it is intended to move the part graphic 572 in the direction along the shared cutting set lines CL1 and CL2, the projection portion 572p collides against the cutout 571n, and therefore, the part graphic 572 may not be moved.

Accordingly, the CPU 11, in step S316, returns the part graphics 571 and 572 to initial positions illustrated in (a) of FIG. 11 and ends the processes.

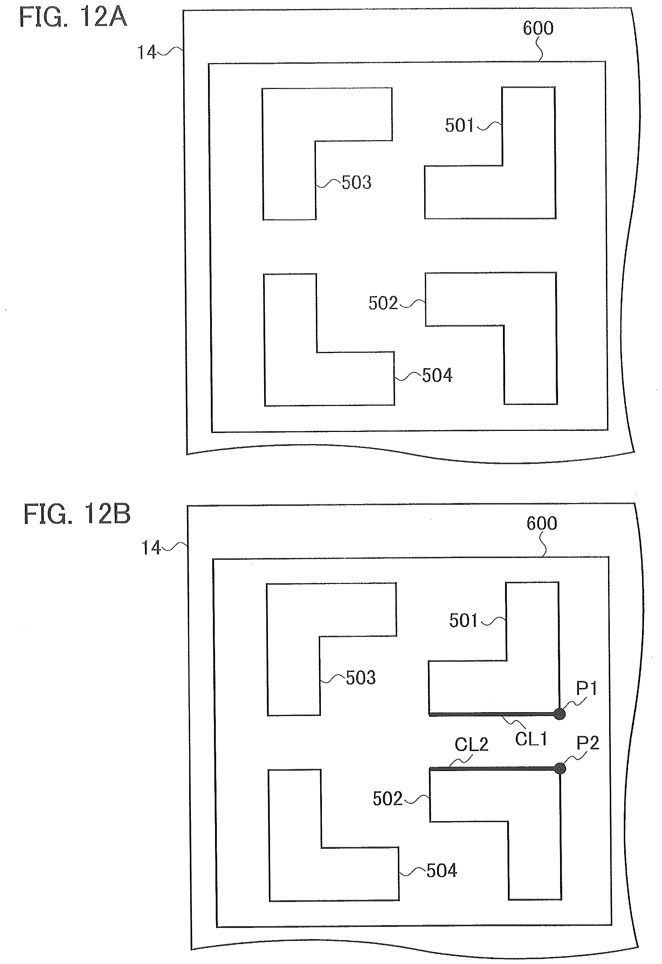

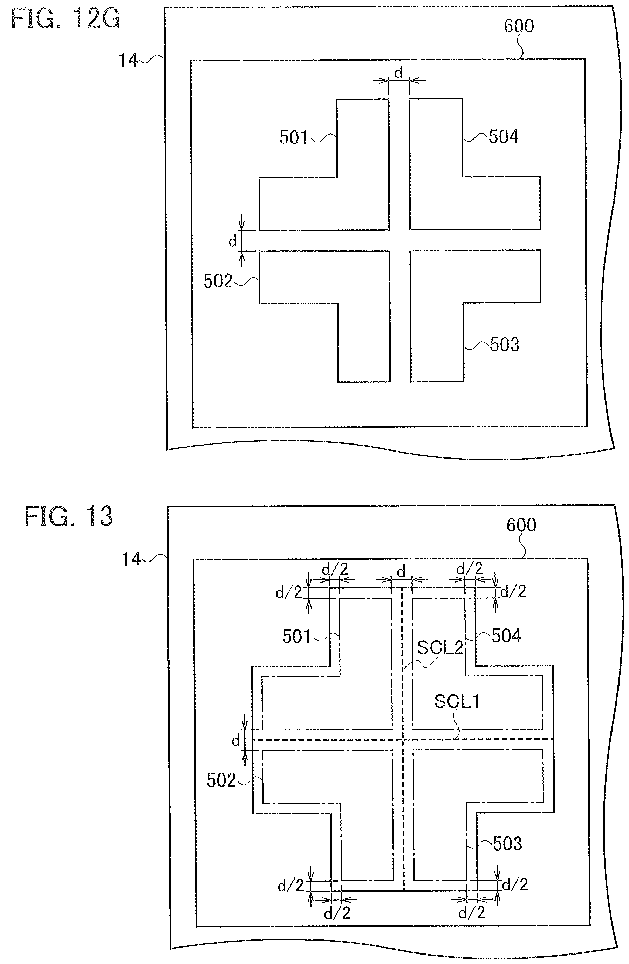

Next, with reference to FIGS. 12A to 12G and FIG. 13, described are examples of a series of processes of a case where four part graphics from aggregated part graphics and an external shape cutting line and a shared cutting line are set to the aggregated part graphics. In FIG. 12A, the display 14 displays blank layout data in which four part graphics composed of part graphics 501 to 504 are arranged with a material area 600 indicating an area of a rectangular-shaped material.

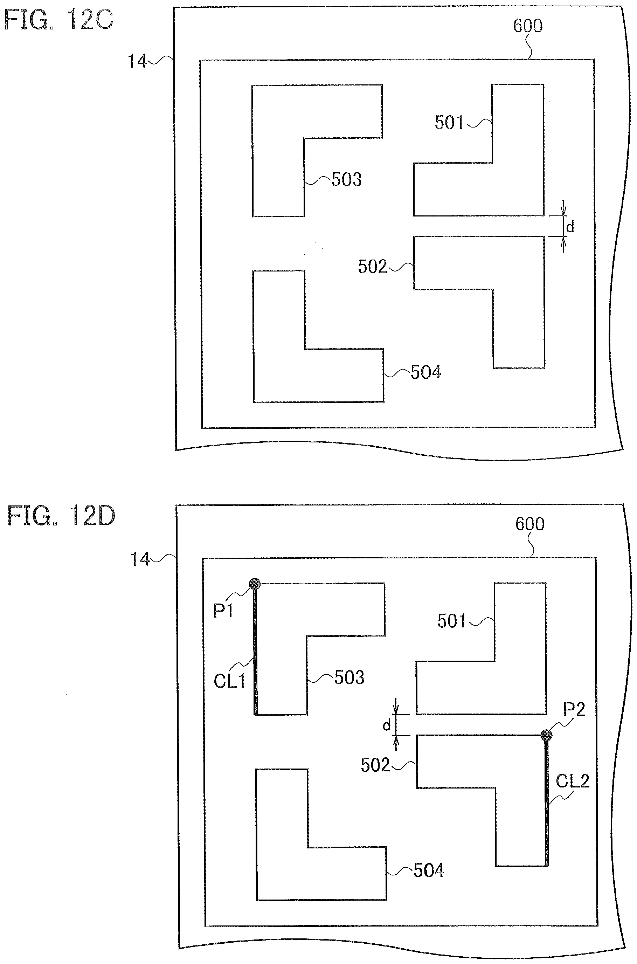

As illustrated in FIG. 12B, the operator sets the reference point P1 and the shared cutting set line CL1 to a part graphic 501 and sets the reference point P2 and the shared cutting set line CL2 to a part graphic 502. As illustrated in FIG. 12C, the CPU 11 causes the part graphics 501 and 502 to be adjacent to each other, and then causes the part graphics 501 and 502 to be spaced apart from each other by the distance d.

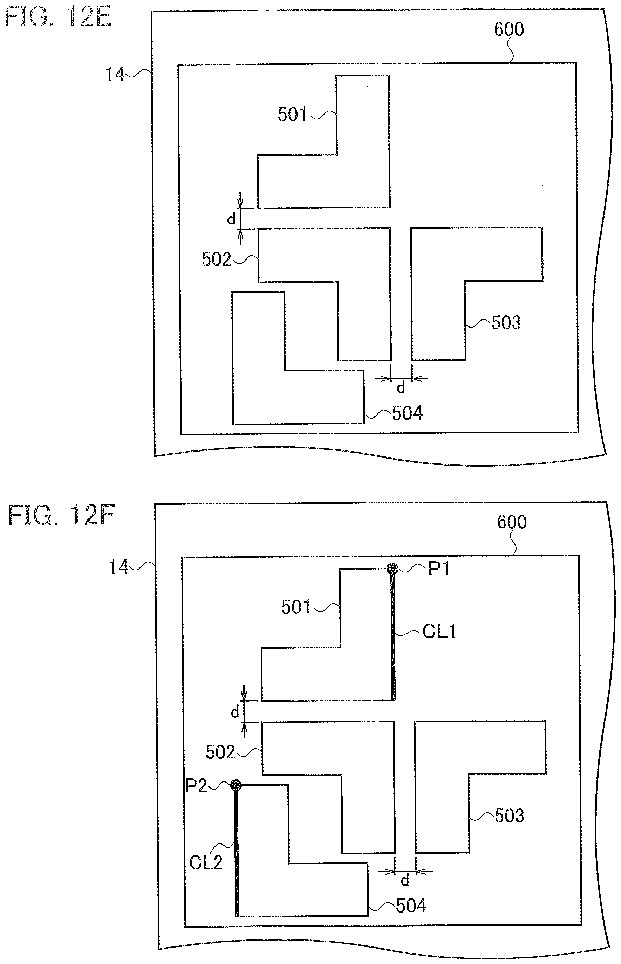

Next, as illustrated in FIG. 12D, the operator newly sets the reference point P1 and the shared cutting set line CL1 to a part graphic 503, and sets the reference point P2 and the shared cutting set line CL2 to the part graphic 502. As illustrated in FIG. 12E, the CPU 11 causes the part graphics 502 and 503 to be adjacent to each other, and then causes the part graphics 502 and 503 to be spaced apart by the distance d. Positions of the part graphics 501 to 504 in the material area 600 are appropriately adjusted.

Further, as illustrated in FIG. 12F, the operator newly sets the reference point P1 and the shared cutting set line CL1 to the part graphic 501 and sets the reference point P2 and the shared cutting set line CL2 to a part graphic 504. As illustrated in FIG. 12G, the CPU 11 causes the part graphics 501 and 504 to be adjacent to each other, and then, causes the part graphics 501 and 504 to be spaced apart from each other by the distance d. As described above, aggregated part graphics are formed which are formed from the four part graphics 501 to 504, each of which is spaced apart by the distance d from a vertically adjacent part graphic and is spaced apart by the distance d from a horizontally adjacent part graph.

If it is instructed to set an external shape cutting line and a shared cutting line to the aggregated part graphics illustrated in FIG. 12G, processes in or after step S307 of FIG. 3A are performed. As a result, as illustrated in FIG. 13, an external shape cutting line EL50 and the shared cutting lines SCL1 and SCL2 are set.

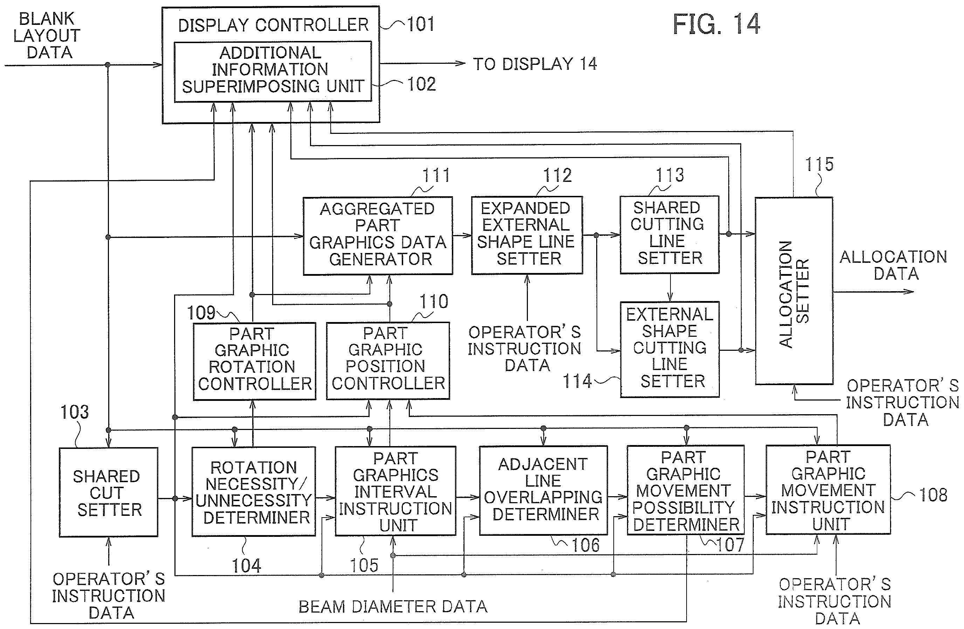

The CPU 11 that performs the processes illustrated in flowcharts of FIG. 2, FIG. 3A and FIG. 3B has a functional internal constitution as illustrated in FIG. 14. The CPU 11, by executing a CAM program, operates as a controls device having a constitution as illustrated in FIG. 14.

In FIG. 14, blank layout data is supplied to a display controller 101, individual units arranged in a range from a shared cut setter 103 to a part graphic movement instruction unit 108, and an aggregated part graphics data generator 111. The display controller 101 displays the blank layout data on the display 14. The display controller 101 includes an additional information superimposing unit 102.

The shared cut setter 103, based on the instruction by the operator, sets the reference point P1 and the shared cutting set line CL1 to one of the two part graphics and sets the reference point P2 and the shared cutting set line CL2 to the other. Pieces of setting information of the reference point P1 and the shared cutting set line CL1, and the reference point P2 and the shared cutting set line CL2 are supplied to the additional information superimposing unit 102, individual units arranged in a range from a rotation necessity/unnecessity determiner 104 to the part graphic movement instruction unit 108, and a part graphic position controller 110.

The additional information superimposing unit 102 superimposes colors different from those of part graphics to portions of two part graphics set with the reference point P1 and the shared cutting set line CL1, and the reference point P2 and the shared cutting set line CL2. The additional information superimposing unit 102 may differentiate colors of the reference point P1 and the shared cutting set line CL1, and the reference point P2 and the shared cutting set line CL2.

The rotation necessity/unnecessity determiner 104 determines whether it is necessary to rotate two part graphics to cause the two part graphics to be adjacent to each other. If it is necessary to rotate the part graphics, a part graphic rotation controller 109 controls the display controller 101 such that the part graphics displayed by the display controller 101 rotate. Further, the part graphic rotation controller 109 controls the aggregated part graphics data generator 111 such that part graphic data supplied to the aggregated part graphics data generator 111 rotates.

A part graphics interval instruction unit 105, based on beam diameter data, instructs the part graphic position controller 110 to set an interval between two adjacent part graphics as a distance d of a beam diameter. The part graphic position controller 110 causes the reference point P1 and the reference point P2 of the two part graphics to be matched with each other and causes the shared cutting set line CL1 and the shared cutting set line CL2 to be overlapped with each other to cause the two part graphics to be adjacent to each other. Further, the part graphic position controller 110 controls the display controller 101 and the aggregated part graphics data generator 111 such that the interval between the two part graphics is the distance d of the beam diameter.

An adjacent line overlapping determiner 106 determines whether the adjacent line AL1 and the adjacent line AL2 are overlapped with each other. If the adjacent line AL1 and the adjacent line AL2 are overlapped with each other, a part graphic movement possibility determiner 107 determines whether one of the two part graphics can be moved in the direction along the shared cutting set lines CL1 and CL2.

If one of the two part graphics can be moved in the direction along the shared cutting set lines CL1 and CL2, the part graphic movement instruction unit 108 instructs the part graphic position controller 110 to move one part graphic by the distance d in the direction along the shared cutting set lines CL1 and CL2. The part graphic position controller 110 controls the display controller 101 and the aggregated part graphics data generator 111 such that an interval between the adjacent line AL1 and the adjacent line AL2 of the two part graphics is the distance d.

If one of the two part graphics may not be moved in the direction along the shared cutting set lines CL1 and CL2, the part graphic movement possibility determiner 107 instructs the additional information superimposing unit 102 to display an alert message. The additional information superimposing unit 102 displays, on the display 14, the alert message indicating that the aggregated part graphic may not be cut in a shared manner.

As explained in FIG. 7A, the part graphic movement instruction unit 108, in accordance with the instruction by the operator, may instruct the part graphic position controller 110 to move the part graphic. The part graphic position controller 110, in accordance with the instruction by the part graphic movement instruction unit 108, controls the display controller 101 and the aggregated part graphics data generator 111 to move the part graphics.

If a determination of the aggregated part graphics is instructed by the operator, an expanded external shape line setter 112 sets an expanded external shape line in which an external shape of each part graphic is expanded by the distance d/2. A shared cutting line setter 113 sets one of mutually overlapped line segments of an expanded external shape line set to an adjacent part graphic as a shared cutting line and deletes the other. An external shape cutting line setter 114 sets a portion of the expanded external shape line set to the adjacent part graphic from which the mutually overlapped line segments are excluded as the external shape cutting line of the entire aggregated part graphics.

Pieces of data indicating the shared cutting line set by the shared cutting line setter 113 and the external shape cutting line set by the external shape cutting line setter 114 are supplied to the additional information superimposing unit 102. The additional information superimposing unit 102 displays the external shape cutting line and the shared cutting line in the material area 600 instead of displaying them in the aggregated part graphics.

An allocation setter 115, based on the instruction by the operator, allocates a cut path in a case where the external shape cutting line and the shared cutting line are cut with a laser beam and generates the allocation data. The allocation data defines a cutting starting position and a cutting ending position of the external shape cutting line, a cutting starting position and a cutting ending position of the shared cutting line, and the cutting order of external shape cutting line and shared cutting line. If there are a plurality of shared cutting lines, the allocation data defines the cutting order of the plurality of shared cutting lines. The allocation setter 115 may automatically allocate the cut path or the cutting order, or an operator may modify the cut path or the cutting order automatically allocated by the allocation setter 115.

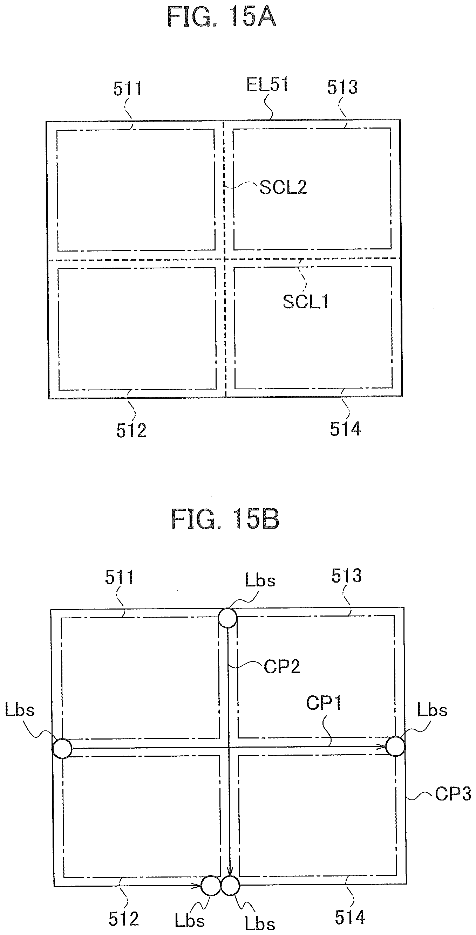

By taking a case where four rectangular-shaped part graphics form aggregated part graphics as an example, an example of an allocation of a cut path is described. FIG. 15A illustrates a state in which four part graphics 511 to 514 form aggregated part graphics and the external shape cutting line EL51 and the shared cutting lines SCL1 and SCL2 are set.

As illustrated in FIG. 15B, in accordance with the allocation data generation device and the allocation data generation method according to the present embodiment, cut paths CP1 to CP3 are allocated to the external shape cutting line EL51 and the shared cutting lines SCL1 and SCL2. The cut path CP1 is a cut path in which a laser beam is scanned such that a beam spot Lbs moves on the shared cutting line SCL1 in a direction indicated by an arrow and a material is cut. The cut path CP2 is a cut path in which the laser beam is scanned such that the beam spot Lbs moves on the shared cutting line SCL2 in a direction indicated by an arrow, and the material is cut. A cutting propagation direction of the cut path CP1 may be opposed to a cutting propagation direction of the cut path CP2.

The cut path CP3 is a cut path in which the laser beam is scanned such that the beam spot Lbs moves on the external shape cutting line EL51 in a direction indicated by an arrow and the material is cut. A cutting propagation direction of the cut path CP3 may be an opposite direction.

The allocation setter 115 may set the cutting order such that cutting by the cut path CP1 and cutting by the cut path CP2 are performed in any order, and cutting by the cut path CP3 is performed after the cutting by the cut path CP1 and the cutting by the cut path CP2 performed in any order.

According to the cut paths CP1 to CP3 illustrated in FIG. 15B, whichever direction each cut path may take, it is sufficient if the laser beam is scanned such that the center of the beam spot Lbs moves on the external shape cutting line EL51 and the shared cutting lines SCL1 and SCL2 and the material is cut. In accordance with the allocation data generation device and the allocation data generation method according to the present embodiment, it is not necessary to set the cut path by displacing the cutting position, and it is not necessary to set a direction in which a cutting position is displaced by the direction of the cut path either. Therefore, in accordance with the allocation data generation device and the allocation data generation method according to the present embodiment, an allocation operation of a cut path can be easily performed to the aggregated part graphics.

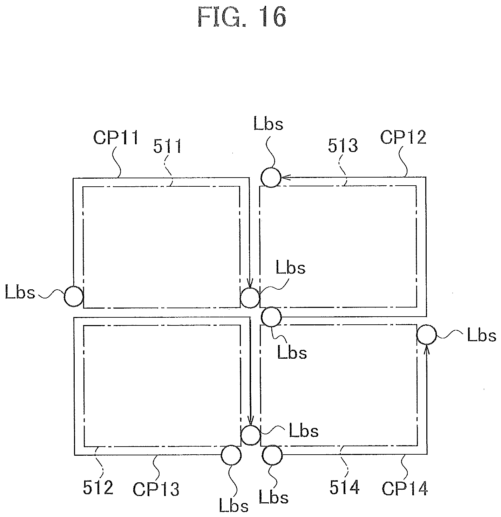

FIG. 16, as a comparative example, illustrates an example of a conventional allocation of a cut path in a case where four part graphics 511 to 514 form aggregated part graphics. As illustrated in FIG. 16, according to the conventional allocation of the cut path, cut paths CP11 to CP14 are allocated to the peripheries of the part graphics 511 to 514.

The cut path CP11 is a cut path in which, on the left side of the part graphic 511, the cutting position is displaced by the distance d/2 of the half of the beam diameter (the half of the diameter of the beam spot Lbs) and the material is cut in a clockwise direction. The cut path CP12 is a cut path in which, on the right side of a part graphic 513, the cutting position is displaced by the distance d/2 and the material is cut in a counterclockwise direction. The cut path CP13 is a cut path in which, on the left side of the part graphic 512, the cutting position is displaced by the distance d/2 and the material is cut in the clockwise direction. The cut path CP14 is a cut path in which, on the right side of the part graphic 514, the cutting position is displaced by the distance d/2, and the material is cut in the counterclockwise direction.

In this way, according to the conventional allocation of the cut path, an operator needs to set a displacement direction of the cutting position which is displaced by the distance d/2 of the half of the beam diameter depending on whether the part graphics 511 to 514 are cut in the clockwise direction or whether the part graphics 511 to 514 are cut in the counterclockwise direction. Further, to prevent space between adjacent part graphics from being cut twice, the cut paths CP11 to CP14 need to be allocated in such a way that cut paths are not overlapped. The conventional allocation of the cut path illustrated in FIG. 16 is extremely complicated.

In the allocations of the cut paths CP1 to CP3 in accordance with the allocation data generation device and the allocation data generation method according to the present embodiment illustrated in FIG. 15B, as compared with FIG. 16, an allocation operation is considerably easy. Even if an operator is an inexperienced operator, the operator can perform the allocation operation, and regardless of whether an operator is inexperienced or experienced, an operator can easily perform the allocation operation to the aggregated part graphics.

By the way, by the formation of the aggregated part graphics as has been described above, the position of the part graphic within the material area 600 is differentiated from the position of the part graphic set in input blank layout data. The CPU 11, in accordance with the instruction by the operator, may cause a position of the aggregated part graphics within the material area 600 to be moved to a preferable position. The CPU 11, in accordance with the instruction by the operator, may copy the aggregated part graphics and arrange the plurality of aggregated part graphics within the material area 600. The CPU 11 updates blank layout data and, based on the updated blank layout data, generates a processing program.

The present invention is not limited to an embodiment described above, and various modifications are possible within the scope of the appended set of claims.

A constitution illustrated in FIG. 14 may be constituted from hardware composed of a circuit and the like. Software (a computer program) and hardware can be used properly in any way. A CAM program may be stored in a non-transitory storage medium and may be provided to a laser processing system. The NC device 20 may generate allocation data.

The disclosure of the present application is related to the subject matter described in Japanese Patent Application No. 2018-061667 filed on March 28, 2018.

## Claims

1. A processing program generation device Z configured to receive a laser beam diameter data and a blank layout data in which part graphics are arranged in a graphic showing a material;
the allocation data generation device comprising:
a shared cut setter (103) configured to set a first line segment comprised in a first part graphic in the graphic showing the material for creating a first part by cutting the material with the laser beam and a second line segment comprised in a second part graphic in the graphic showing the material for creating a second part by cutting the material with the laser beam respectively as first and second shared cutting set lines, based on an instruction by an operator;
a part graphic position controller (110) configured to control positions of the first and second part graphics such that the first and second shared cutting set lines are spaced apart from each other by a distance of the beam diameter of the laser beam and are parallel with each other;
an expanded external shape line setter (112) configured to set first and second expanded external shape lines respectively to position in which external shape lines of the first and second part graphics are expanded by a distance of a half of the beam diameter in a state in which the first and second shared cutting set lines are spaced apart from each other by the distance of the beam diameter and are parallel with each other;
a shared cutting line setter (113) configured to set one of mutually overlapped line segments of the first and second expanded external shape lines as a shared cutting line and delete the other;
an external shape cutting line setter (114) configured to set a portion of the first and second expanded external shape lines from which the mutually overlapped line segments are excluded as an external shape cutting line for cutting an external shape of aggregated part graphics comprising the first and second part graphics; and
an allocation setter (115) configured to allocate a cut path to the external shape cutting line and the shared cutting line by the laser beam and generate allocation data of the aggregated part graphics,
the allocation data generation device being further configured to generate a processing program for controlling a laser processing machine based on the blank layout data and the allocation data.

2. The processing program generation device according to claim 1, wherein
the shared cut setter (103) is configured to set first and second reference points that are positioned on the first and second shared cutting set lines respectively; and
the part graphic position controller (110) is configured to cause the first and second reference points to be matched with each other and causes the first and second shared cutting set lines to be overlapped with each other to cause the first and second part graphics to be adjacent to each other, and thereafter, to cause the first and second part graphics to be spaced apart from each other by the distance of the beam diameter.

3. The processing program generation device according to claim 2, wherein the part graphic position controller (110) comprises: a part graphic rotation controller (109) configured to cause the first and second reference points to be matched with each other, and in a case where the first and second shared cutting set lines are not overlapped with each other, is configured to rotate the first or second part graphic so that the first and second shared cutting set lines are overlapped with each other.

4. The processing program generation device according to any one of claims 1 to 3, further comprising: a part graphic movement instruction unit (108) configured to move the first or second part graphic in a direction along the first and second shared cutting set lines in accordance with an instruction by the operator in the state in which the first and second shared cutting set lines are spaced apart from each other by the distance of the beam diameter and are parallel with each other.

5. The processing program generation device according to any one of claims 1 to 3, further comprising:
an adjacent line overlapping determiner (106) configured to determine whether first and second adjacent lines that are respectively adjacent to the first and second shared cutting set lines are overlapped with each other in the state in which the first and second shared cutting set lines are spaced apart from each other by the distance of the beam diameter and are parallel with each other;
a part graphic movement possibility determiner (107) configured to determine whether the first or second part graphic can be moved by the distance of the beam diameter in the direction along the first and second shared cutting set lines in a case where it is determined by the adjacent line overlapping determiner (106) that the first and second adjacent lines are overlapped with each other; and
a part graphic movement instruction unit (108) configured to cause the first or second part graphic to be moved by the distance of the beam diameter in the direction along the first and second shared cutting set lines in a case where it is determined by the part graphic movement possibility determiner that the first or second part graphic can be moved in the direction along the first and second shared cutting set lines.

6. A processing program generation method for generating a processing program for controlling a laser processing machine, the processing program generation method comprising the following steps performed by a computing device (10):
receiving a laser beam diameter data and a blank layout data in which part graphics are arranged in a graphic showing a material;
setting a first line segment comprised in a first part graphic in the graphic showing the material for creating a first part by cutting the material with the laser beam and a second line segment comprised in a second part graphic in the graphic showing the material for creating a second part by cutting the material with the laser beam respectively as first and second shared cutting set lines, based on an instruction by an operator;
controlling positions of the first and second part graphics such that the first and second shared cutting set lines are spaced apart from each other by a distance of the beam diameter of the laser beam and are parallel with each other;
setting first and second expanded external shape lines respectively to positions in which external shape lines of the first and second part graphics are expanded by a distance of a half of the beam diameter in a state in which the first and second shared cutting set lines are spaced apart from each other by the distance of the beam diameter and are parallel with each other;
setting one of mutually overlapped line segments of the first and second expanded external shape lines as a shared cutting line and deleting the other;
setting a portion of the first and second expanded external shape lines from which the mutually overlapped line segments are excluded as an external shape cutting line for cutting an external shape of aggregated part graphics comprising the first and second part graphics; and
allocating a cut path to the external shape cutting line and the shared cutting line by the
laser beam and generating allocation data of the aggregated part graphics;
generating the processing program for controlling the laser processing machine based on the blank layout data and the allocation data.

7. The processing program generation method according to claim 6, wherein
the computing device (10):
sets first and second reference points that are respectively positioned on the first and second shared cutting set lines based on an instruction by the operator; and
causes the first and second reference points to be matched with each other and causes the first and second shared cutting set lines to be overlapped with each other to cause the first and second part graphics to be adjacent to each other, and thereafter causes the first and second part graphics to be spaced apart by the distance of the beam diameter.

8. The processing program generation method according to claim 7, wherein the computing device (10) causes the first and second reference points to be matched with each other, and in a case where the first and second shared cutting set lines are not overlapped with each other, causes the first or second part graphic to be rotated so that the first and second shared cutting set lines are overlapped with each other.

9. The processing program generation method according to any one of claims 6 to 8, wherein the computing device (10) causes the first or second part graphic to be moved in a direction along the first and second shared cutting set lines in accordance with the instruction by the operator in the state in which the first and second shared cutting set lines are spaced apart from each other by the distance of the beam diameter and are parallel with each other.

10. The processing program generation method according to any one of claims 6 to 8, further comprising the following steps performed by the computing device (10)
determining whether first and second adjacent lines that are respectively adjacent to the first and second shared cutting set lines are overlapped with each other in the state in which the first and second shared cutting set lines are spaced apart from each other by the distance of the beam diameter and are parallel with each other;
determining whether the first or second part graphic can be moved by the distance of the beam diameter in the direction along the first and second shared cutting set lines in a case where it is determined that the first and second adjacent lines are overlapped with each other; and
causing the first or second part graphic to be moved by the distance of the beam diameter in the direction along the first and second shared cutting set lines in a case where it is determined that the first or second part graphic can be moved in the direction along the first and second shared cutting set lines.

## Patentansprüche

1. Zum Empfangen von Laserstrahldurchmesser-Daten und Leerlayout-Daten, in denen Teilgrafiken in einer Grafik zur Darstellung eines Materials angeordnet sind, ausgebildete Bearbeitungsprogramm-Erzeugungsvorrichtung;
wobei die Zuordnungsdaten-Erzeugungsvorrichtung umfasst:
einen zum Festlegen eines in einer ersten Teilgrafik in der Grafik zur Darstellung des Materials enthaltenen ersten Liniensegments zum Erzeugen eines ersten Teils durch Schneiden des Materials mit dem Laserstrahl und eines in einer zweiten Teilgrafik in der Grafik zur Darstellung des Materials enthaltenen zweiten Liniensegments zum Erzeugen eines zweiten Teils durch Schneiden des Materials mit dem Laserstrahl jeweils als erste und zweite gemeinsamen Schnitteinrichtungslinien auf der Basis einer Anweisung von einem Bediener ausgebildeten gemeinsamen Schnitteinrichter (103);
ein zum Steuern von Positionen der ersten und zweiten Teilgrafik, so dass die erste und zweite gemeinsamen Schnitteinrichtungslinie zueinander in einem Abstand des Strahldurchmessers des Laserstrahls beabstandet und parallel zueinander sind, ausgebildetes Teilgrafik-Positionssteuergerät (110);
einen zum Festlegen von erster und zweiter erweiterter Außenformlinie jeweils auf eine Position, in der Außenformlinien der ersten und zweiten Teilgrafik um einen Abstand einer Hälfte des Strahldurchmessers erweitert sind, in einem Zustand, in dem die erste und zweite gemeinsame Schnitteinrichtungslinie voneinander um den Abstand des Strahldurchmessers beabstandet und zueinander parallel sind, ausgebildeten Einrichter (112) von erweiterten Außenformlinien;
einen zum Festlegen von einem von sich gegenseitig überlappenden Liniensegmenten der ersten und zweiten erweiterten Außenformlinie als eine gemeinsame Schnittlinie und Löschen der anderen ausgebildeten Einrichter (113) von gemeinsamen Schnittlinien;
einen zum Festlegen eines Abschnitts der ersten und zweiten erweiterten Außenformlinie, von dem die sich gegenseitig überlappenden Liniensegmente ausgeschlossen sind, als eine Außenform-Schnittlinie zum Schneiden einer Außenform von gesammelten Teilgrafiken umfassend die erste und zweite Teilgrafik ausgebildeten Außenformschnittlinien-Einrichter (114); und
einen zum Zuordnen eines Schnittwegs zur Außenform-Schnittlinie und zur gemeinsamen Schnittlinie durch den Laserstrahl und Erzeugen von Zuordnungsdaten der gesammelten Teilgrafiken ausgebildeten Zuordnungseinrichter (115),
wobei die Zuordnungsdaten-Erzeugungsvorrichtung ferner zum Erzeugen eines Bearbeitungsprogramms zum Steuern einer Laserbearbeitungsmaschine auf der Basis der Leerlayout-Daten und der Zuordnungsdaten ausgebildet ist.

2. Bearbeitungsprogramm-Erzeugungsvorrichtung nach Anspruch 1, wobei
der gemeinsame Schnitteinrichter (103) zum Festlegen von erstem und zweitem Referenzpunkt, die jeweils auf erster und zweiter gemeinsamer Schnitteinrichtungslinie angeordnet sind, ausgebildet ist; und
das Teilgrafik-Positionssteuergerät (110) zum Bewirken des Übereinstimmens von erstem und zweitem Referenzpunkt miteinander und Bewirken des Überlappens von erster und zweiter gemeinsamer Schnitteinrichtungslinie miteinander zum Bewirken, dass erste und zweite Teilgrafik aneinander angrenzend sind, und anschließend zum Bewirken, dass erste und zweite Teilgrafik voneinander um einen Abstand des Strahldurchmessers beabstandet sind, ausgebildet ist.

3. Bearbeitungsprogramm-Erzeugungsvorrichtung nach Anspruch 2, wobei das Teilgrafik-Positionssteuergerät (110) umfasst: ein zum Bewirken des Übereinstimmens von erstem und zweitem Referenzpunkt miteinander ausgebildetes und, wenn erste und zweite gemeinsame Schnitteinrichtungslinie nicht miteinander überlappen, ausgebildetes und zum Drehen der ersten oder zweiten Teilgrafik, so dass die erste und zweite gemeinsame Schnitteinrichtungsline miteinander überlappen, ausgebildetes Teilgrafik-Drehungssteuergerät (109).

4. Bearbeitungsprogramm-Erzeugungsvorrichtung nach einem der Ansprüche 1 bis 3, ferner umfassend: eine zum Bewegen der ersten oder zweiten Teilgrafik in einer Richtung entlang der ersten und zweiten gemeinsamen Schnitteinrichtungslinie entsprechend einer Anweisung vom Bediener im Zustand, in dem die erste und zweite gemeinsamen Schnitteinrichtungslinie voneinander um den Abstand des Strahldurchmessers beabstandet und parallel zueinander sind, ausgebildete Teilgrafik-Bewegungsanweisungseinheit (108).

5. Bearbeitungsprogramm-Erzeugungsvorrichtung nach einem der Ansprüche 1 bis 3, ferner umfassend:
einen zum Bestimmen, ob erste und zweite angrenzende Linie, die jeweils an die erste und zweite gemeinsame Schnitteinrichtungslinie angrenzen, eine Überlappung miteinander im Zustand, in dem die erste und zweite gemeinsame Schnitteinrichtungslinie voneinander um den Abstand des Strahldurchmessers beabstandet und parallel zueinander sind, aufweisen, ausgebildeten Angrenzungslinien-Überlappungsbestimmer (106);
einen zum Bestimmen, ob die erste oder zweite Teilgrafik um den Abstand des Strahldurchmessers in der Richtung entlang der ersten und zweiten gemeinsamen Schnitteinrichtungslinie bewegt werden kann, wenn vom Angrenzungslinien-Überlappungsbestimmer (106) bestimmt wurde, dass die erste und zweite angrenzende Linie miteinander überlappen, ausgebildeten Teilgrafik-Bewegungsmöglichkeitsbestimmer (107); und
eine zum Bewirken des Bewegens der ersten oder zweiten Teilgrafik um den Abstand des Strahldurchmessers in der Richtung entlang der ersten und zweiten gemeinsamen Schnitteinrichtungslinie, wenn vom Teilgrafik-Bewegungsmöglichkeitsbestimmer bestimmt wurde, dass die erste oder zweite Teilgrafik in der Richtung entlang der ersten und zweiten gemeinsamen Schnitteinrichtungslinie bewegt werden kann, ausgebildete Teilgrafik-Bewegungsanweisungseinheit (108).

6. Bearbeitungsprogramm-Erzeugungsverfahren zum Erzeugen eines Bearbeitungsprogramms zum Steuern einer Laserbearbeitungsmaschine, wobei das Bearbeitungsprogramm-Erzeugungsprogramm die folgenden von einem Computergerät (10) ausgeführten Schritte umfasst:
Empfangen von Laserstrahldurchmesser-Daten und Leerlayout-Daten, in denen Teilgrafiken in einer Grafik zur Darstellung eines Materials angeordnet sind;
Festlegen eines in einer ersten Teilgrafik in der Grafik zur Darstellung des Materials enthaltenen ersten Liniensegments zum Erzeugen eines ersten Teils durch Schneiden des Materials mit dem Laserstrahl und eines in einer zweiten Teilgrafik in der Grafik zur Darstellung des Materials enthaltenen zweiten Liniensegments zum Erzeugen eines zweiten Teils durch Schneiden des Materials mit dem Laserstrahl jeweils als erste und zweite gemeinsame Schnitteinrichtungslinie auf der Basis einer Anweisung von einem Bediener;
Steuern von Positionen der ersten und zweiten Teilgrafik, so dass die erste und zweite gemeinsame Schnitteinrichtungslinie zueinander in einem Abstand des Strahldurchmessers des Laserstrahls beabstandet und parallel zueinander sind;
Festlegen von erster und zweiter erweiterter Außenformlinie jeweils auf Positionen, in denen Außenformlinien der ersten und zweiten Teilgrafik um einen Abstand einer Hälfte des Strahldurchmessers erweitert sind, in einem Zustand, in dem die erste und zweite gemeinsame Schnitteinrichtungslinie voneinander um den Abstand des Strahldurchmessers beabstandet und zueinander parallel sind;
Festlegen von sich gegenseitig überlappenden Liniensegmenten der ersten und zweiten erweiterten Außenformlinie als eine gemeinsame Schnittlinie und Löschen der anderen;
Festlegen eines Abschnitts der ersten und zweiten erweiterten Außenformlinie, von dem die sich gegenseitig überlappenden Liniensegmente ausgeschlossen sind, als eine Außenform-Schnittlinie zum Schneiden einer Außenform von gesammelten Teilgrafiken umfassend die erste und zweite Teilgrafik; und
Zuordnen eines Schnittwegs zur Außenform-Schnittlinie und zur gemeinsamen Schnittlinie durch den Laserstrahl und Erzeugen von Zuordnungsdaten der gesammelten Teilgrafiken;
Erzeugen des Bearbeitungsprogramms zum Steuern der Laserbearbeitungsmaschine auf der Basis der Leerlayout-Daten und der Zuordnungsdaten.

7. Bearbeitungsprogramm-Erzeugungsverfahren nach Anspruch 6, wobei das Computergerät (10):
den ersten und zweiten Referenzpunkt, die jeweils auf der ersten und zweiten gemeinsamen Schnitteinrichtungslinie angeordnet sind, auf der Basis einer Anweisung des Bedieners festlegt; und
das Übereinstimmen von erstem und zweitem Referenzpunkt miteinander und das Überlappen von erster und zweiter gemeinsamer Schnitteinrichtungslinie miteinander zum Bewirken, dass erste und zweite Teilgrafik aneinander angrenzend sind, und anschließend zum Bewirken, dass erste und zweite Teilgrafik voneinander um einen Abstand des Strahldurchmessers beabstandet sind, bewirkt.

8. Bearbeitungsprogramm-Erzeugungsverfahren nach Anspruch 7, wobei das Computergerät (10) das Übereinstimmen von erstem und zweitem Referenzpunkt miteinander bewirkt und, wenn erste und zweite gemeinsame Schnitteinrichtungslinie nicht miteinander überlappen, das Drehen von erster oder zweiter Teilgrafik bewirkt, so dass die erste und zweite gemeinsame Schnitteinrichtungsline miteinander überlappen.

9. Bearbeitungsprogramm-Erzeugungsverfahren nach einem der Ansprüche 6 bis 8, wobei das Computergerät (10) bewirkt, dass die erste oder zweite Teilgrafik in einer Richtung entlang der ersten und zweiten gemeinsamen Schnitteinrichtungslinie entsprechend einer Anweisung vom Bediener im Zustand, in dem die erste und zweite gemeinsamen Schnitteinrichtungslinie voneinander um den Abstand des Strahldurchmessers beabstandet und parallel zueinander sind, bewegt wird.

10. Bearbeitungsprogramm-Erzeugungsverfahren nach einem der Ansprüche 6 bis 8, ferner umfassend die vom Computergerät (10) ausgeführten folgenden Schritte zum Bestimmen, ob erste und zweite angrenzende Linie, die jeweils an die erste und zweite gemeinsame Schnitteinrichtungslinie angrenzen, eine Überlappung miteinander im Zustand, in dem die erste und zweite gemeinsame Schnitteinrichtungslinie voneinander um den Abstand des Strahldurchmessers beabstandet und parallel zueinander sind, aufweisen;
Bestimmen, ob die erste oder zweite Teilgrafik um den Abstand des Strahldurchmessers in der Richtung entlang der ersten und zweiten gemeinsamen Schnitteinrichtungslinie bewegt werden kann, wenn bestimmt wurde, dass die erste und zweite angrenzende Linie miteinander überlappen; und
Bewirken des Bewegens der ersten oder zweiten Teilgrafik um den Abstand des Strahldurchmessers in der Richtung entlang der ersten und zweiten gemeinsamen Schnitteinrichtungslinie, wenn bestimmt wurde, dass die erste oder zweite Teilgrafik in der Richtung entlang der ersten und zweiten gemeinsamen Schnitteinrichtungslinie bewegt werden kann.

## Revendications

1. Dispositif de génération de programmes de traitement configuré pour recevoir des données de diamètre de faisceau laser et des données de tracé d'ébauche dans lequel des graphiques de pièce sont agencés dans un graphique qui représente un matériau ;
le dispositif de génération de données d'attribution comprenant :
un dispositif d'établissement de coupe partagée (103) configuré pour établir un premier segment de ligne compris dans un premier graphique de pièce dans le graphique montrant le matériau pour créer une première pièce en découpant le matériau avec le faisceau laser, et un deuxième segment de ligne compris dans un deuxième graphique de pièce dans le graphique montrant le matériau pour créer une deuxième pièce en découpant le matériau avec le faisceau laser, comme respectivement des première et deuxième lignes d'établissement de découpe partagées, sur base d'une instruction par un opérateur ;
un contrôleur de position de graphique de pièce (110) configuré pour contrôler les positions des premier et deuxième graphiques de pièce de telle sorte que les première et deuxième lignes d'établissement de découpe partagées soient espacées entre elles d'une distance équivalant au diamètre de faisceau du faisceau laser et soient parallèles entre elles ;
un dispositif d'établissement de ligne de forme externe élargie (112) configuré pour établir des première et deuxième lignes de forme externe élargies respectivement dans une position où les lignes de forme externe des premier et deuxième graphiques de pièce sont élargies d'une distance équivalant à la moitié du diamètre du faisceau dans un état où les première et deuxième lignes d'établissement de découpe partagées sont espacées entre elles de la distance du diamètre du faisceau et sont parallèles entre elles ;
un dispositif d'établissement de ligne de coupe partagée (113) configuré pour établir l'un des segments de ligne qui se chevauchent mutuellement des première et deuxième lignes de forme externe élargies comme une ligne de coupe partagée, et pour effacer l'autre ;
un dispositif d'établissement de ligne de coupe de forme externe (114) configuré pour établir une portion des première et deuxième lignes de forme externe élargies dont les segments de ligne qui se chevauchent mutuellement sont exclus comme ligne de coupe de forme externe pour découper une forme externe de graphiques de pièce agrégés comprenant les premier et deuxième graphiques de pièce ; et
un dispositif d'établissement d'attribution (115) configuré pour attribuer un chemin de coupe à la ligne de coupe de forme externe et à la ligne de coupe partagée par le faisceau laser et pour générer des données d'attribution des graphiques de pièce agrégés,
le dispositif de génération de données d'attribution étant en outre configuré pour générer un programme de traitement pour contrôler une machine de traitement laser sur la base des données de tracé d'ébauche et des données d'attribution.

2. Dispositif de génération de programmes de traitement selon la revendication 1, dans lequel
le dispositif d'établissement de coupe partagée (103) est configuré pour établir des premier et deuxième points de référence qui sont positionnés respectivement sur les première et deuxième lignes d'établissement de découpe partagées ; et
le contrôleur de position de graphique de pièce (110) est configuré pour commander une mise en correspondance des premier et deuxième points de référence et pour commander un chevauchement des première et deuxième lignes d'établissement de découpe partagées de telle sorte que les premier et deuxième graphiques de pièce soient adjacents entre eux, et ensuite pour commander un espacement des premier et deuxième graphiques de pièce de la distance du diamètre de faisceau.

3. Dispositif de génération de programmes de traitement selon la revendication 2, dans lequel le contrôleur de position de graphique de pièce (110) comprend : un contrôleur de rotation de graphique de pièce (109) configuré pour commander une mise en correspondance des premier et deuxième points de référence, et dans un cas où les première et deuxième lignes d'établissement de découpe partagées ne se chevauchent pas, est configuré pour faire tourner le premier ou le deuxième graphique de pièce de telle sorte que les première et deuxième lignes d'établissement de découpe partagées se chevauchent.

4. Dispositif de génération de programmes de traitement selon l'une quelconque des revendications 1 à 3, comprenant en outre : une unité d'instruction de déplacement de graphique de pièce (108) configurée pour déplacer le premier ou le deuxième graphique de pièce dans une direction qui suit les première et deuxième lignes d'établissement de découpe partagées conformément à une instruction par l'opérateur dans l'état où les première et deuxième lignes d'établissement de découpe partagées sont espacées de la distance du diamètre de faisceau et sont parallèles entre elles.

5. Dispositif de génération de programmes de traitement selon l'une quelconque des revendications 1 à 3, comprenant en outre :
un déterminateur de chevauchement de ligne adjacente (106) configuré pour déterminer si des première et deuxième lignes adjacentes qui sont respectivement adjacentes aux première et deuxième lignes d'établissement de découpe partagées se chevauchent dans l'état où les première et deuxième lignes d'établissement de découpe partagées sont espacées de la distance du diamètre de faisceau et sont parallèles entre elles ;
un déterminateur de possibilité de déplacement de graphique de pièce (107) configuré pour déterminer si le premier ou deuxième graphique de pièce peut être déplacé de la distance du diamètre de faisceau dans la direction qui suit les première et deuxième lignes d'établissement de découpe partagées dans le cas où il est déterminé par le déterminateur de chevauchement de ligne adjacente (106) que les première et deuxième lignes adjacentes se chevauchent : et
une unité d'instruction de déplacement de graphique de pièce (108) configurée pour commander un déplacement du premier ou deuxième graphique de pièce de la distance du diamètre de faisceau dans la direction qui suit les première et deuxième lignes d'établissement de découpe partagées dans le cas où il est déterminé par le déterminateur de possibilité de déplacement de graphique de pièce que le premier ou deuxième graphique de pièce peut être déplacé dans la direction qui suit les première et deuxième lignes d'établissement de découpe partagées.

6. Procédé de génération de programme de traitement pour générer un programme de traitement afin de contrôler une machine de traitement laser, le procédé de génération de programme de traitement comprenant les étapes suivantes mises en œuvre par un dispositif de calcul (10) :
réception de données de diamètre de faisceau laser et de données de tracé d'ébauche dans lequel des graphiques de pièce sont agencés dans un graphique montrant un matériau ;
établissement d'un premier segment de ligne compris dans un premier graphique de pièce dans le graphique montrant le matériau pour créer une première pièce en découpant le matériau avec le faisceau laser et un deuxième segment de ligne compris dans un deuxième graphique de pièce dans le graphique montrant le matériau pour créer une deuxième pièce en découpant le matériau avec le faisceau laser comme respectivement des première et deuxième lignes d'établissement de découpe partagées, sur base d'une instruction par un opérateur ;
contrôle de positions des premier et deuxième graphiques de pièce de telle sorte que les première et deuxième lignes d'établissement de découpe partagées soient espacées d'une distance équivalant au diamètre de faisceau du faisceau laser et soient parallèles entre elles ;
établissement de première et deuxième lignes de forme externe élargies respectivement à des positions dans lesquelles des lignes de forme externe des premier et deuxième graphiques de pièce sont élargies d'une distance de la moitié du diamètre de faisceau dans un état où les première et deuxième lignes d'établissement de découpe partagées sont espacées entre elles de la distance du diamètre du faisceau et sont parallèles entre elles ;
établissement de l'un des segments de ligne qui se chevauchent mutuellement des première et deuxième lignes de forme externe élargies comme une ligne de coupe partagée et effacement de l'autre ;
établissement d'une portion des première et deuxième lignes de forme externe élargies dont les segments de ligne qui se chevauchent mutuellement sont exclus comme une ligne de coupe de forme externe pour découper une forme externe de graphiques de pièce agrégés comprenant les premier et deuxième graphiques de pièce ; et
attribution d'un chemin de coupe à la ligne de coupe de forme externe et à la ligne de coupe partagée par le faisceau laser et génération de données d'attribution des graphiques de pièce agrégés ;
génération du programme de traitement pour contrôler la machine de traitement laser sur la base des données de tracé d'ébauche et des données d'attribution.

7. Procédé de génération de programme de traitement selon la revendication 6, dans lequel le dispositif de calcul (10) :
établit des premier et deuxième points de référence qui sont positionnés respectivement sur les première et deuxième lignes d'établissement de découpe partagées sur la base d'une instruction par l'opérateur ; et
met en correspondance les premier et deuxième points de référence et commande un chevauchement des première et deuxième lignes d'établissement de découpe partagées de telle sorte que les premier et deuxième graphiques de pièce soient adjacents entre eux, et commande ensuite l'espacement des premier et deuxième graphiques de pièce de la distance du diamètre de faisceau.

8. Procédé de génération de programme de traitement selon la revendication 7, dans lequel le dispositif de calcul (10) commande la mise en correspondance des premier et deuxième points de référence, et dans un cas où les première et deuxième lignes d'établissement de découpe partagées ne se chevauchent pas, commande une rotation du premier ou deuxième graphique de pièce de telle sorte que les première et deuxième lignes d'établissement de découpe partagées se chevauchent.

9. Procédé de génération de programme de traitement selon l'une quelconque des revendications 6 à 8, dans lequel le dispositif de calcul (10) commande un déplacement du premier ou deuxième graphique de pièce dans une direction qui suit les première et deuxième lignes d'établissement de découpe partagées conformément à l'instruction de l'opérateur dans l'état où les première et deuxième lignes d'établissement de découpe partagées sont espacées de la distance du diamètre de faisceau et sont parallèles entre elles.

10. Procédé de génération de programme de traitement selon l'une quelconque des revendications 6 à 8, comprenant en outre les étapes suivantes mises en œuvre par le dispositif de calcul (10) :
détermination du fait que les première et deuxième lignes adjacentes qui sont respectivement adjacentes aux première et deuxième lignes d'établissement de découpe partagées se chevauchent ou non dans l'état où les première et deuxième lignes d'établissement de découpe partagées sont espacées de la distance du diamètre de faisceau et sont parallèles entre elles ;
détermination du fait que le premier ou deuxième graphique de pièce peut ou non être déplacé de la distance du diamètre de faisceau dans la direction qui suit les première et deuxième lignes d'établissement de découpe partagées dans le cas où il est déterminé que les première et deuxième lignes adjacentes se chevauchent ; et
commande d'un déplacement du premier ou deuxième graphique de pièce de la distance du diamètre de faisceau dans la direction qui suit les première et deuxième lignes d'établissement de découpe partagées dans le cas où il est déterminé que le premier ou deuxième graphique de pièce peut être déplacé dans la direction qui suit les première et deuxième lignes d'établissement de découpe partagées.
